# EUROPÄISCHE PATENTANMELDUNG

(11) **EP 2 922 009 A1**
(43) Veröffentlichungstag der Anmeldung: **23.09.2015**
(21) Anmeldenummer: 14160510.5
(22) Anmeldetag: 18.03.2014
(51) Int. Cl.: G06Q 30/02, H04N 21/00

(54) **Verfahren zum Endgeräte-übergreifenden Tracking eines Nutzers eines Internet-Angebots, Trackingserver zur Ausführung eines solchen Verfahrens und Computernetzwerk mit einem solchen Trackingserver**

(71) Anmelder: HURRA Communications GmbH, 70599 Stuttgart (DE)
(72) Erfinder: René Schweier, 70599 Stuttgart (DE)
(74) Vertreter: DREISS Patentanwälte PartG mbB

(57) **Zusammenfassung**

Die Erfindung betrifft ein Verfahren, einen Trackingserver (6) und ein Computernetzwerk (1) zum Endgeräteübergreifenden Tracking eines Nutzers (7) eines Internet-Angebots. Das Verfahren umfassend die Schritte:
- beim Aufruf des Internet-Angebots von einem Webserver (3, 4, 5) durch den Nutzer (7) über ein Endgerät (8, 10, 12, 14, 16, 18), Empfangen von Informationen durch den Trackingserver (6) über das Internet (2), und
- Identifikation des Endgeräts (8, 10, 12, 14, 16, 18) durch den Trackingserver (6). Um ein Endgeräteübergreifendes Nutzer-spezifisches Tracking zu ermöglichen, werden die nachfolgenden Schritte vorgeschlagen:
- Empfangen von Nutzer-spezifischen Informationen durch den Trackingserver (6),
- Verarbeiten der empfangenen Informationen durch den Trackingserver (6),
- Vergleich der empfangenen Informationen mit in einer Datenbank (21; 21'; 21") abgespeicherten Informationen, die verschiedenen Nutzern (7) zugeordnet sind,
- bei einer Übereinstimmung der empfangenen Informationen und der abgespeicherten Informationen, Identifikation des Nutzers (7) des Endgeräts (8, 10, 12, 14, 16, 18), und
- Abspeichern von zusätzlichen, dem identifizierten Nutzer (7) zugeordneten Informationen in der Datenbank (21; 21'; 21"), die zusätzlichen Informationen betreffend das aufgerufene Internet-Angebot.

## Beschreibung

Die vorliegende Erfindung betrifft ein Verfahren zum Endgeräte-übergreifenden Tracking eines Nutzers im Internet, wobei der Nutzer ein über einen Webserver zur Verfügung gestelltes Internet-Angebot nutzt, das Verfahren umfassend die folgenden Schritte:
- beim Aufruf des Internet-Angebots von einem Webserver durch den Nutzer über ein Endgerät, Empfangen von Informationen durch einen Trackingserver über das Internet, die Informationen betreffend den Aufruf, das Internet-Angebot, den das Internet-Angebot zur Verfügung stellenden Webserver und/oder das Endgerät, und
- Identifikation des Endgeräts durch den Trackingserver.

Die Erfindung betrifft außerdem einen an das Internet angeschlossenen Trackingserver mit Mitteln zum Empfangen von Informationen über das Internet, die einen Aufruf eines Internet-Angebots von einem Webserver durch einen Nutzer über ein Endgerät, das Internet-Angebot, den das Internet-Angebot zur Verfügung stellenden Webserver und/oder das Endgerät betreffen, und mit Mitteln zur Identifikation des Endgeräts.

Schließlich betrifft die Erfindung ein Computernetzwerk umfassend zumindest einen Teil des Internets, einen an das Internet angeschlossenen Trackingserver, mindestens einen an das Internet angeschlossenen Webserver und mehrere verschiedene mit dem Internet verbindbare Endgeräte, über die ein Nutzer jeweils ein Internet-Angebot von dem mindestens einen Webserver aufrufen kann. Der Trackingserver umfasst:
- Mittel zum Empfangen von Informationen über das Internet, die den Aufruf des Internet-Angebots von dem mindestens einen Webserver durch den Nutzer über eines der Endgeräte, das Internet-Angebot, den das Internet-Angebot zur Verfügung stellenden Webserver und/oder das Endgerät betreffen, und
- Mittel zur Identifikation des Endgeräts.

Das genannte Internet ist ein Beispiel für ein Kommunikationsnetzwerk, das mehrere Computer miteinander verbindet, damit diese untereinander Daten austauschen können. Als Webserver wird beispielsweise ein mit dem Kommunikationsnetzwerk verbundener Computer bezeichnet, auf dem eine Software abläuft, so dass der Server geeignet ist, über das Internet bestimmte Dienste bereitzustellen. Diese Dienste können beispielsweise das Bereitstellen von Informationen oder Ressourcen (beispielsweise Speicherplatz, Rechenkapazität oder ein Zugang zu einem von dem restlichen Internet abgetrennten Kommunikationsnetzwerk) sein. Die Dienste können aber auch der Verkauf einer Dienstleistung oder eines Produkts sein. Ein Webserver, der solche Dienste zur Verfügung stellt, wird auch als Online-Shop bezeichnet.

Die bereitgestellten Dienste werden typischerweise durch einen Nutzer über ein Endgerät (einen sogenannten Client) in Anspruch genommen, das mit dem Internet in Verbindung steht. Ein und derselbe Nutzer kann die Dienste über unterschiedliche Endgeräte in Anspruch nehmen. Endgeräte, über welche die Dienste in Anspruch genommen werden können, sind bspw. Smartphones, Tablet-Computer, Laptop-Computer, Desktop-Computer oder sogar Rundfunkgeräte, die einen Internetzugang aufweisen. Damit die Dienste in Anspruch genommen werden können, wird von dem Client eine Verbindung zu dem Internet aufgebaut, über die eine Anfrage von dem Client an einen entsprechenden Webserver gestellt wird, der den gewünschten Dienst zur Verfügung stellt. Der Server wertet die eingehende Anfrage aus, überprüft gegebenenfalls eine Berechtigung des Clients zum Stellen der Anfrage bzw. zur Inanspruchnahme der zur Verfügung gestellten Dienste und übermittelt der Anfrage entsprechende Informationen an den Client beziehungsweise stellt dem Client angeforderte Ressourcen zur Verfügung.

Häufig werden im Internet Informationen von einem Server in Form von sogenannten Netzwerkseiten (auch Internetseiten, Webseiten oder kurz Seiten genannt) einem Client zur Verfügung gestellt. Zur Beschreibung des Inhalts einer Netzwerkseite wird eine Seitenbeschreibungssprache verwendet. Heutzutage wird im Internet, aber auch in anderen Kommunikationsnetzen, dazu überwiegend die standardisierte Seitenbeschreibungssprache HTML (Hypertext Markup Language) eingesetzt. HTML erlaubt es, auf einfache Weise den Inhalt und das Aussehen einer Netzwerkseite in einem sogenannten HTML-Dokument zu beschreiben. Fordert beispielsweise ein Client Informationen von einem Webserver an, so übermittelt der Server ein die angeforderten Informationen enthaltendes HTML-Dokument an den Client.

Sollen die dem Client mittels des HTML-Dokuments übermittelten Informationen an dem Client dargestellt und dem Nutzer präsentiert werden, so wird die Netzwerkseite beziehungsweise das HTML-Dokument einem speziellen Computerprogramm (sogenannter Browser) zugeführt, das auf dem Client abläuft und in der Lage ist, HTML-Dokumente zu interpretieren und mittels einer grafischen Oberfläche auf einem Bildschirm des Client darzustellen. Manche Endgeräte, bspw. Fernsehgeräte, die einen Internetzugang aufweisen, verfügen lediglich über einen rudimentären Browser, der die empfangenen Informationen nur in beschränktem Umfang darstellen kann. Wichtig ist, dass selbst solche Browser mit beschränktem Funktionsumfang über das Internet empfangene Informationen in gewünschter Weise verarbeiten und ggf. entsprechende Aktionen, wie bspw. die Darstellung auf einem Bildschirm, auslösen können. So können bspw. empfangene Informationen einen Client dazu veranlassen, seinerseits über das Internet bestimmte Anfragen oder Informationen an einen oder mehrere vorgegebene Webserver zu übertragen.

Die von dem Webserver an den Client übermittelten Netzwerkseiten können bereits vor der Anforderung durch den Client erzeugt und an geeigneter Stelle abgespeichert worden sein. Derartige Netzwerkseiten bezeichnet man als statische Netzwerkseiten.

Häufig wird von einem Client jedoch eine derart spezifische Anfrage an den Webserver gestellt, dass die die angeforderten Informationen enthaltenden Netzwerkseiten dynamisch von dem Server erzeugt werden. Dies ist beispielsweise der Fall, wenn ein Nutzer mittels des Clients an einen als Suchmaschine ausgebildeten Server eine Anfrage in Form eines bestimmten Suchbegriffes sendet. Die Suchmaschine ermittelt nach einem vorgebbaren Algorithmus anhand des Suchbegriffes Informationen, die mit dem Suchbegriff assoziiert werden. In Abhängigkeit von den ermittelten Informationen wird automatisch eine dynamische Netzwerkseite von dem Server erzeugt und an den Client übermittelt. Die mit einem bestimmten Suchbegriff assoziierten Informationen können bspw. eine Liste von Netzwerkseiten von anderen Anbietern oder Webservern umfassen, die einen mit dem Suchbegriff assoziierten Dienst anbieten. Die Informationen können vorab, d.h. vor der eigentlichen Anfrage, ermittelt und in einer Datenbank abgespeichert werden. Zur Beantwortung der Suchanfrage müssen dann nur noch die zuvor ermittelten Informationen aus der Datenbank ausgelesen, die dynamische Netzwerkseite erzeugt und an den Client übermittelt werden.

Eine Vielzahl von Clients und Servern kommunizieren mittels des Internets und bilden in ihrer Gesamtheit ein Computernetzwerk, genauer gesagt ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem Verzeichnis und einem der Netzwerkseite zugeordneten Namen zusammengesetzt. Aus der URL kann eine eindeutige Netzwerkadresse (oder IP-Adresse) des Webservers abgeleitet werden, der die angeforderte Netzwerkseite vorhält. Eine URL erlaubt es, die dieser URL zugeordnete Netzwerkseite direkt von einem Client aus anzuwählen. Dazu gibt ein Nutzer beispielsweise mittels einer Tastatur die URL in einem speziellen Eingabefeld des Browsers ein. Der Client generiert daraufhin eine Anfrage an den entsprechenden Server, der dann die angeforderte Netzwerkseite an den Client übermittelt. Die Anforderung einer speziellen Netzwerkseite kann von dem Endgerät auch automatisch ausgesandt werden, bspw. bei einem Fernsehgerät mit Internet-Anschluss beim Einschalten des Fernsehgeräts, beim Drücken einer bestimmten Taste auf einer Fernbedienung (sog. Red Button) oder beim Wechseln des Fernsehsenders. Dies wird im Stand der Technik bspw. durch Fernsehgeräte realisiert, die dem HbbTV-Standard entsprechen.

Innerhalb eines HTML-Dokuments ist es möglich, URLs weiterer Netzwerkseiten beziehungsweise HTML-Dokumente anzugeben. Derartige URLs werden als Verweis oder als Hyperlink (kurz: Link) bezeichnet. Auf statischen Netzwerkseiten dargestellte Verweise werden im Folgenden als statische Verweise bezeichnet. Analog werden auf dynamischen Netzwerkseiten dargestellte Verweise im Folgenden als dynamische Verweise bezeichnet.

Werden Verweise mittels eines Browsers einem Nutzer präsentiert, so hat der Nutzer die Möglichkeit, einen dargestellten Verweis anzuwählen (bspw. durch Anklicken mit einer Maus oder durch Betätigen einer Enter-Taste auf einer Tastatur) und sich die der angewählten URL entsprechende Netzwerkseite anzeigen zu lassen. Dabei kann sich die angewählte Netzwerkseite insbesondere auch auf einem anderen Webserver befinden.

Häufig wird von einem ersten Server ein zweiter Server beauftragt, auf Netzwerkseiten, die von dem zweiten Server übermittelt werden, einen Verweis auf eine Netzwerkseite des ersten Servers darzustellen. Ein solcher Verweis kann beispielsweise ein sogenanntes Werbe-Banner sein, das mittels einer textuellen und/oder grafischen Darstellung für ein über den ersten Server zu beziehendes Produkt oder eine über den ersten Server vermittelte Dienstleistung wirbt. Dabei sind einem auf der zweiten Netzwerkseite dargestellten Verweis typischerweise Text-, Klang- und/oder Graphikelemente zugeordnet, die mittels des Browsers dem Nutzer dargestellt werden. Der Begriff "Verweis" umfasst somit auch die Gesamtheit der dem Verweis zugeordneten Informationen.

Die zweite Netzwerkseite kann bspw. eine dynamisch generierte Trefferliste als Antwort auf eine Suchanfrage eines Nutzers sein, die von einem als Suchmaschine ausgebildeten zweiten Server zur Verfügung gestellt wird. Auf der Trefferliste können zum einen die einzelnen Treffer als Verweise dargestellt werden. Es kann darüber hinaus aber auch noch beliebige Online-Werbung als Verweis auf der Trefferliste dargestellt werden. Durch Anwählen eines auf der Trefferliste dargestellten Verweises wird der Nutzer auf die angewählte erste Netzwerkseite weitergeleitet, die dem Client des Nutzers von einem ersten Server zur Verfügung gestellt wird. Die zweite Netzwerkseite kann bspw. eine Startseite eine Produkt-Seite eines Online-Shops sein, auf der ein bestimmtes Internet-Angebot angeboten wird. Über das Internet-Angebot kann der Betreiber des ersten Servers ein Produkt oder eine Dienstleistung zum Kauf oder zur Nutzung anbieten.

Ein über einen Webserver eines Online-Shops angebotenes Produkt kann insbesondere eine von dem ersten Server angebotene Information sein. Als Produkt kann ferner ein von dem ersten Server angebotener Zugang zu einem geschützten Speicherbereich sein, in welchem weitere Informationen abgelegt sind und abgerufen werden können. Derartige Informationen können beispielsweise Nachrichten, Börsenkurse, sowie sonstige Text-, Musik- oder Bilddateien sein. Ein angebotenes Produkt kann aber auch ein über das Internet zur Verfügung gestellter Speicherbereich sein, auf dem der Nutzer beliebige Daten abspeichern kann. Solche gegen Bezahlung zur Verfügung gestellte Speicherbereiche sind aus dem Stand der Technik unter dem Begriff "Cloud Computing" bekannt.

Ist der zweite Server eine Suchmaschine, so kann der Betreiber des ersten Servers, bspw. ein Online-Shop, den zweiten Server beauftragen, auf einer in Abhängigkeit eines von einem Nutzer eingegebenen Suchbegriffs dynamisch erzeugten Netzwerkseite mit einer Trefferliste, einen Verweis auf eine dem ersten Server zugeordnete Netzwerkseite darzustellen. Dabei können bspw. auf der von der Suchmaschine dynamisch generierten Netzwerkseite Verweise in Form von beliebiger Online-Werbung für einen oder mehrere Online-Shops und/oder für von diesen angebotene Produkte dargestellt werden. Wenn der Nutzer auf einen der dargestellten Verweise klickt, d.h. den damit verknüpften Link aktiviert, wird eine entsprechende Netzwerkseite des Online-Shops geladen und dem Nutzer über den Browser seines Endgeräts dargestellt. Der Nutzer hat nun die Möglichkeit, bei dem beworbenen Online-Shop online einzukaufen bzw. das beworbene Produkt zu erwerben. Je nach dem, ob es zu einem Kaufabschluss mit dem Nutzer kommt, ist der Verweis mehr oder weniger wertvoll.

Da ein Online-Shop oder ein Online-Anbieter eines Produkts für einen auf einer Netzwerkseite, die von dem zweiten Server zur Verfügung gestellt wird, dargestellten Verweis üblicherweise für jedes Anwählen des Verweises durch einen Nutzer den Betreiber des zweiten Servers bezahlen muss (Pay-per-Click oder Cost-per-Click, CPC), ist es für den Online-Shop bzw. den Online-Anbieter wichtig zu erfahren, ob sich die Platzierung des Verweises auf die aktuelle Art und Weise lohnt oder nicht. Die aktuelle Art und Weise der Platzierung eines Verweises kann eine bestimmte ästhetische Ausgestaltung des Verweises, eine bestimmte Netzwerkseite, auf welcher der Verweis platziert wurde, eine Platzierung auf einer Netzwerkseite eines bestimmten Anbieters, etc. Um dies beurteilen zu können, wird häufig eine sogenannte Konversionsrate (sog. Conversion Rate) aus dem Quotienten der Anzahl an Käufern (Nutzer, die bei einem beworbenen Online-Shop eingekauft haben bzw. ein beworbenes Produkt erworben haben) und der Anzahl an Besuchern des Online-Shops ermittelt, die über den Verweis auf den Online-Shop gelangt sind (Anzahl der Clicks auf den Verweis). Es sind auch eine große Zahl anderer Größen bekannt, anhand derer der Erfolg bzw. die Effizienz eines Verweises ermittelt werden kann.

Voraussetzung für eine effiziente Bewertung des Erfolgs eines Verweises bzw. einer Online-Werbung ist ein Tracking des Surfverhaltens von Nutzern im Internet. Die Ermittlung des Erfolgs bzw. der Effizienz eines Verweises kann ebenfalls Teil des Tracking sein. Das Tracking kann von dem Betreiber des Online-Shops selbst oder durch Drittanbieter mittels Trackingserver ausgeführt werden. Ein Trackingserver kann ein eigenständiger an das Internet angeschlossener Computer sein. Es ist aber auch denkbar, dass der Trackingserver Bestandteil eines anderen Webservers ist und auf diesem in Form von Software realisiert ist, die auf dem Webserver abläuft.

Ursprünglich war es nur möglich zu ermitteln, ob ein zuvor ausgeführter Click auf den auf einer zweiten Netzwerkseite dargestellten Verweis unmittelbar im Anschluss zu einer Konversion, d.h. zu einem Einkauf durch den Nutzer geführt hat, der den Verweis angewählt hat. Das war jedoch unbefriedigend, da Nutzer häufig zunächst einen Verweis anklicken, um sich bspw. bei dem Online-Shop über das Angebot zu informieren, ohne jedoch sofort dort einzukaufen. Wenn der Nutzer dann zu einem späteren Zeitpunkt zu dem Online-Shop zurückkehrt und dort dann einkauft, war es bislang nicht möglich, diesen Einkauf mit dem unabhängig davon zuvor erfolgten Besuch des Online-Shops zu verknüpfen. Dies gilt insbesondere dann, wenn der Nutzer bei seinem zweiten Besuch nicht durch Anklicken eines Verweises zu dem Online-Shop gelangt ist, sondern durch direkte Eingabe der URL der Netzwerkseite des Online-Shops. Um auch in solchen Fällen eine Verknüpfung eines durch einen Nutzer getätigten Einkaufs mit einem dem Nutzer zuvor und unabhängig von dem Einkauf gezeigten Verweis und mit einem erfolgten Anklicken des Verweises zu ermöglichen, ist es aus dem Stand der Technik ferner bekannt, dass der Trackingserver oder ein anderer Server bei einem ersten Besuch eines Nutzers bei einem Online-Shop auf dem Endgerät des Nutzers ein Cookie setzt, das bei jedem weiteren Besuch bei dem oder bei einem anderen von dem Trackingserver verwalteten Online-Shop ausgelesen und ausgewertet wird. In dem Cookie ist u.a. eine Kennung des Endgeräts gespeichert, über das der Nutzer den Verweis angewählt und die Netzwerkseite des Online-Shops aufgerufen hat. Anhand des Cookies kann das Endgerät identifiziert werden. Der Trackingserver kann anhand der in dem Cookie gespeicherten Informationen ermitteln, ob ein Käufer über das für den Einkauf verwendete Endgerät zuvor schon einmal über einen auf einer Netzwerkseite dargestellten Verweis zu dem Online-Shop gelangt ist. Mit Hilfe des Cookies ist es also möglich, eine Verknüpfung zwischen einem früheren Besuch des Nutzers und einem später von dem Nutzer getätigten Einkauf herzustellen, sofern der frühere Besuch und der Einkauf von demselben Endgerät erfolgten. Derartige Verfahren sind bspw. aus der EP 1 484 696 B1 und der WO 00/38074 A1 bekannt. Sobald der Nutzer für einen früheren Besuch und einen anschließenden Einkauf unterschiedliche Endgeräte benutzt, ist eine Verknüpfung zwischen früherem Besuch und späterem Einkauf nicht mehr möglich.

Nachteilig bei den bekannten Verfahren ist es somit, dass das Tracking nur bezüglich einzelner Endgeräte und nicht Endgeräte-übergreifend erfolgen kann. Dies ist nicht möglich, da in den auf dem Endgerät abgespeicherten Cookies aus datenschutzrechtlichen Gründen keine Nutzer-bezogenen Informationen abgespeichert werden dürfen. So können bei der bekannten Bewertung des Erfolgs eines Verweises bspw. solche Situationen nicht berücksichtigt werden, bei denen ein Nutzer über ein erstes Endgerät (bspw. sein Smartphone) im Internet surft, verschiedene Online-Shops besucht und sich die Angebote ansieht. Den eigentlichen Einkauf tätigt der Nutzer dann aber nicht von seinem Smartphone aus, sondern bequem über ein zweites Endgerät (bspw. einen Desktop-Computer) am Arbeitsplatz oder von zu Hause aus. Bei dem bekannten Verfahren würde zwar für jeden Online-Shop bzw. für jeden beteiligten Trackingserver ein Cookie auf dem ersten und dem zweiten Endgerät des Nutzers gesetzt werden. Trotz dieser Cookies wäre es dem Trackingserver aber nicht möglich, den von dem gleichen Nutzer zu einem späteren Zeitpunkt von einem anderen Endgerät aus getätigten Einkauf mit den zuvor über das erste Endgerät getätigten Besuchen bei dem Online-Shop und das damit verbundene Anwählen von entsprechenden Verweisen zu verknüpfen. Insbesondere ist es nicht möglich, eine Nutzer-spezifische Bewertung des Erfolgs eines Verweises für verschiedene Endgeräte des Nutzers vorzunehmen.

Je mehr Verweise auf einer von einem zweiten Server an einen Client übermittelten Netzwerkseite dargestellt werden, desto größer ist üblicherweise die zu übertagende Datenmenge für die Netzwerkseite. Dies führt zu einer erhöhten Belastung des Kommunikationsnetzwerks. Ferner benötigt eine mit einem oder mehreren Verweisen angereicherte Netzwerkseite mehr Speicherplatz, sowohl auf dem übermittelnden zweiten Server als auch auf dem empfangenden Client. Außerdem führt die Anzeige von vielen Verweisen auf der Netzwerkseite zu einer Belastung der Rechenleistung des zweiten Servers, insbesondere wenn die Verweise grafische oder akustische Elemente oder ein Video umfassen. Um die Rechenleistung und die Speicherkapazität des Webservers und des Clients sowie die Übertragungskapazität des Kommunikationsnetzwerks durch die Übertragung einer möglichst geringe Datenmenge so weit wie möglich zu entlasten, ist es wünschenswert, nur solche Verweise auf der von dem zweiten Server dynamisch erzeugten Netzwerkseite darzustellen, die für den Client bzw. für den Nutzer auch tatsächlich von Interesse sind und mit hoher Wahrscheinlichkeit zu einer Konversion führen. Dabei erfordert eine besonders genaue und zuverlässige Vorhersage, ob ein Verweis erfolgreich bzw. effizient ist oder nicht, eine Nutzer-spezifische und Endgeräte-übergreifende Bewertung des Verweises. Insofern ist es wünschenswert, nur solche Verweise auf den von dem zweiten Server zur Verfügung gestellten Netzwerkseiten darzustellen, die mit hoher Wahrscheinlichkeit zu einer Konversion führen können. Auf die Übermittlung und Darstellung ineffizienter Verweise kann zur Verringerung des Datenaufkommens in dem Kommunikationsnetzwerk sowie des Speicherplatz- und Rechenleistungsbedarfs sowohl auf dem zweiten Server, der die angeforderte Netzwerkseite generiert, als auch auf dem Endgerät verzichtet werden.

Ausgehend von dem beschriebenen Stand der Technik liegt der vorliegenden Erfindung deshalb die Aufgabe zugrunde, ein Nutzer-spezifisches aber Endgeräte-übergreifendes Tracking des Surfverhaltens eines Nutzers im Internet zu ermöglichen.

Zur Lösung dieser Aufgabe wird ausgehend von dem Verfahren der eingangs genannten Art vorgeschlagen, dass das Verfahren des Weiteren die folgenden Schritte umfasst:
- Empfangen von Nutzer-spezifischen Informationen durch den Trackingserver,
- Verarbeiten der empfangenen Informationen durch den Trackingserver,
- im Rahmen der Verarbeitung der empfangenen Informationen, Vergleich der empfangenen Informationen mit in einer Datenbank abgespeicherten Informationen, die einer Vielzahl von Nutzern zugeordnet sind,
- bei einer zumindest teilweisen Übereinstimmung der empfangenen Informationen und der abgespeicherten Informationen, Identifikation des Nutzers des Endgeräts anhand der empfangenen Informationen und der abgespeicherten Informationen, und
- Abspeichern von zusätzlichen, dem identifizierten Nutzer zugeordneten Informationen in der Datenbank, die zusätzlichen Informationen betreffend das aufgerufene Internet-Angebot.

Gemäß der vorliegenden Erfindung sind in einer Datenbank, auf die der Trackingserver (bspw. über das Internet oder eine separate Datenübertragungsverbindung) Zugriff hat oder die Bestandteil des Trackingservers ist, Informationen bezüglich einer Vielzahl von Nutzern abgespeichert. Die abgespeicherten Informationen sind bspw. von dem Nutzer selbst bei einem ersten Besuch bei einem Online-Shop angegeben worden. Denkbar wäre ferner auch eine Dateneingabe durch den Nutzer im Rahmen eines Gewinnspiels, im Rahmen einer Kaufabwicklung o.ä. Es wäre aber auch denkbar, dass die Nutzer-Informationen von Drittanbietern, die sich auf das Sammeln und Veräußern von Nutzer-Informationen spezialisiert haben, stammen und in der Datenbank abgespeichert werden. Es wäre schließlich auch denkbar, dass die Datenbank von einem Drittanbieter betrieben und verwaltet wird und der Trackingserver lediglich Zugang zu der Datenbank hat, wobei der Zugang evtl. zeitlich beschränkt und/oder kostenpflichtig ist.

Die Nutzer-Informationen sind bspw. durch mindestens eine eindeutige Kennung bestimmten Nutzern zugeordnet. Die Kennung kann auch Bestandteil der gespeicherten Nutzer-Informationen sein. Es handelt sich als um Nutzer-spezifische Informationen, die eine Eingrenzung eines Nutzerkreises oder sogar eine eindeutige Identifikation eines Nutzers, der ein Internet-Angebot aufruft, erlauben. Die Nutzer-spezifischen Informationen, die der Trackingserver empfängt, werden für eine eindeutige Identifikation des Nutzers, der über ein beliebiges Endgerät ein Internet-Angebot aufgerufen hat, genutzt. Dabei werden die empfangenen Nutzer-spezifischen Informationen mit anderen, in einer Datenbank abgespeicherten Nutzer-spezifischen Informationen verglichen. Die in der Datenbank abgespeicherten Informationen sind wesentlich detaillierter als die von dem Trackingserver empfangenen Informationen. Erst durch den Vergleich der empfangenen Informationen mit den in der Datenbank abgespeicherten Informationen ist eine eindeutige Identifikation des Nutzers möglich.

Die Nutzer-spezifischen Informationen können von verschiedenen Quellen stammen. Der Trackingserver kann die Nutzer-spezifischen Informationen auf unterschiedliche Weise empfangen. Gemäß einer vorteilhaften Weiterbildung der Erfindung ist es denkbar, dass die Nutzer-spezifischen Informationen in einem Cookie abgespeichert sind, der auf dem Endgerät abgelegt sind, über das der Nutzer das Internet-Angebot aufruft. Dabei kann es sich um ein Standard-Cookie, ein Flash-Cookie, ein HTML5-Cookie, ein Cache-Cookie oder eine beliebig andere Art von Datei handeln, die auf dem Endgerät abgespeichert ist, Nutzer-spezifische Informationen enthält und von einem Trackingserver ausgelesen werden kann.

Ein Standard-Cookie (Text- oder HTML-Cookie oder einfach nur Cookie) ist in seiner ursprünglichen Form eine Textdatei, die auf einem Endgerät abgespeichert ist und Nutzer-spezifische Informationen enthält. Diese Informationen sind bspw. Daten über besuchte Webseiten, die die Browser-Software beim Surfen im Internet speichert. In dem Cookie können Informationen über komplexes privates Internetverhalten des Nutzers gespeichert sein. Ein Cookie ist nicht versteckt und vom Nutzer jederzeit einsehbar und löschbar. Die Größe eines Cookie ist üblicherweise auf 4 kB beschränkt. Ein Cookie wird dazu genutzt, Surfer beim Besuch einer Netzwerkseite wiederzuerkennen. Web-Seiten dies auch mit Flash-Cookies oder dem Fingerabdruck des Browsers bewerkstelligen.

Ein Flash-Cookie (oder Local Shared Object, kurz LSO) ist ein an einen Flash-Player gebundenes Cookie - also eine Datei, in der beim Surfen im Internet benutzerbezogene Daten auf dem Endgerät des Nutzers zum späteren Wiederabruf durch die betreffende Website oder Webanwendung gespeichert werden. Flash-Cookies haben in der Regel eine längere Verweildauer als normale Text-Cookies. Obwohl die Dateien beim Surfen mit einem Webbrowser entstehen, funktionieren sie Browser-übergreifend und werden von seinem jeweiligen Flash-Player-Plugin verwaltet, welches die Daten zentral und browserunabhängig in der Dateisystemstruktur des verwendeten Betriebssystems ablegt. Ebenso wie der Adobe Flash-Player können auch andere Flash-Player Flash-Cookies anlegen. Im Gegensatz zu herkömmlichen HTTP-Cookies ermöglichen es Flash-Cookies den Webseitenbetreibern, Inhalte Browser-unabhängig und ohne Verfallsdatum auf dem Zielrechner (Endgerät oder Client) zu speichern. So werden Daten, die beim Aufrufen von Flash-Inhalten (Filme, Streaming Media, Werbung usw.) über einen bestimmten Browser-Typ geschrieben wurden, auch beim Betrachten der gleichen Internetseite mit einem anderen Browser-Typ an den Trackingserver gesendet. Der Trackingserver kann dann das Surfverhalten eines lokalen Endgeräts nachvollziehen. In Flash-Cookies können bis zu 100 kB gespeichert werden. Sollte diese Größe überschritten werden, wird der Nutzer benachrichtigt. Falls er zustimmt, kann der Speicherplatz in Stufen (0 kB, 10 kB, 100 kB, 1 MB, 10 MB, unbegrenzt) verändert werden. Flash-Cookies können mit klassischen Cookies interagieren, indem sie diese, selbst wenn der Nutzer sie explizit in seinem Browser gelöscht hat, kopieren, aufbewahren und beim nächsten Besuch der betreffenden Webseite wiederherstellen (sog. Re-Spawning).

Auch der Cache des Browsers kann dazu genutzt werden, Nutzer bei sich wiederholenden Besuchen auf einer Netzwerkseite zu verfolgen. Dazu werden sog. Cache-Cookies oder HTML5-Cookies eingesetzt. Als Basis dafür fungieren die sogenannten E-Tags. Das sind eindeutige Zeichenketten, die bestimmungsgemäß einem bestimmten Objekt - etwa einem auf der von dem Nutzer angeforderten Netzwerkseite dargestellten Bild - zugeordnet werden. Ruft der Browser bspw. das Bild static.jpg ab, sendet der Webserver einen zusätzlichen Header wie E-Tag: 7b449... Wenn eine weitere Seite dieses Bild einbettet, befindet es sich bereits im Cache des Browsers. Deshalb fügt er seiner neuen Anfrage den Header If-None-Match: 7b449... hinzu. Das bedeutet: "Nur schicken, wenn es nicht das gleiche wie damals ist." Hat sich das Bild nicht geändert, antwortet der Server lediglich mit einem "304 Not Modified" und spart sich die erneute Übertragung. Durch das Caching sparen sich Server und Browser die unnötige Übertragung bereits vorhandener Objekte.

Dieser Mechanismus lässt sich auch für User-Tracking nutzen. Dazu muss der Trackingserver jedem Endgerät, das noch kein E-Tag sendet, eine eindeutige Zeichenkette zuordnen, die dann als Index für seine Datenbank dient. Im Prinzip hat dies eine Ähnlichkeit mit herkömmlichen Cookies, mit dem Unterschied, dass die E-Tags auch geschickt werden, wenn der Nutzer Cookies durch die Einstellungen oder entsprechende Erweiterungen blockiert hat. Webseiten bzw. Trackingserver können mit solchen Cache-Cookies sogar Nutzer wiedererkennen, die JavaScript abschalten und den privaten Modus des Browsers benutzen.

Als Alternative zur Nutzung von Cookies zum Tracking von Nutzern im Internet kann auch ein eindeutiger Fingerabdruck genutzt werden, den ein Nutzer mit seinem Browser beim Surfen im Netz hinterlässt. Zur Erstellung des Fingerabdrucks können die auf dem Endgerät installierten Plugins, die unterstützten MIME-Typen und die installierten/ verwendeten Sprachen, Tastaturen und Schriftarten herangezogen werden. Erfahrungsgemäß sind nahezu 90% der Fingerabdrücke eindeutig, wenn man die Analyse alleine auf diese Daten beschränkt. Wenn man darüber hinaus noch weitere Einstellungen, Parameter, Nutzereigenschaften berücksichtigt, kann die Eindeutigkeit der Fingerabdrücke noch einmal deutlich erhöht werden. Insofern kann der Fingerabdruck des Browsers dem Trackingserver Nutzer-spezifische Informationen liefern, die zur eindeutigen Identifikation des Nutzers herangezogen werden können, wenn sie mit den zusätzlichen, in der Datenbank abgelegten, besonders detaillierten Informationen verglichen werden.

Die Nutzer-spezifischen Informationen, die der Trackingserver empfängt, reichen alleine also noch nicht aus, um eine eindeutige Identifikation des Nutzers zu ermöglichen. Dazu sind zusätzliche Nutzerbezogene Informationen erforderlich, die in der Datenbank abgespeichert sind, auf die der Trackingserver Zugriff hat. Die Nutzerbezogenen Informationen können in der Datenbank abgespeichert werden, nachdem der Nutzer dazu sein Einverständnis gegeben hat. Auf diese Weise können die datenschutzrechtlichen Anforderungen eingehalten werden, die eine Speicherung von Informationen, die aus sich heraus eindeutige Rückschlüsse auf den Nutzer, insbesondere eine Identifikation des Nutzers, zulassen, ohne Zustimmung des Nutzers nicht erlauben. Obwohl die auf den Endgeräten abgespeicherten Cookies keine Nutzer-spezifischen Informationen enthalten, die eindeutige Rückschlüsse auf bestimmte Nutzer ermöglichen, erlaubt die vorliegende Erfindung trotzdem ein Nutzer-spezifisches und Endgeräte-übergreifendes Tracking des aktuellen Nutzers. Dies wird insbesondere dadurch ermöglicht, dass zusätzliche, besonders detaillierte Nutzer-Informationen in der Datenbank abgespeichert und zur Identifikation des Nutzers herangezogen werden.

Es ist ausreichend, wenn in dem auf dem Endgerät abgelegten Cookie Endgeräte-spezifische Informationen oder Informationen betreffend frühere Nutzer des Endgeräts abgespeichert sind. Insbesondere enthält des Cookie Informationen betreffend den früheren Nutzer in Form einer eindeutigen Kennung, eines Personennamens, eines Usernamens, unter dem der frühere Nutzer bei dem Webserver registriert ist, einer Lieferanschrift, einer Rechnungsanschrift, einer Kundennummer, einer Bankverbindung, einer Telefonnummer und/oder einer Email-Adresse des früheren Nutzers des Endgeräts. Das Cookie kann auch eine IP-Adresse oder andere Informationen des Clients enthalten. Anhand der in dem Cookie abgespeicherten Informationen kann über einen Vergleich mit den in der Datenbank abgelegten Informationen der aktuelle Nutzer eindeutig identifiziert werden. Dadurch kann eine Verknüpfung eines aktuellen Einkaufs eines Nutzers bei einem Online-Shop mit vorangegangenen Besuchen bei dem Online-Shop mittels Aufrufen des Internet-Angebots verknüpfen. Trotz der relativ wenigen in dem Cookie auf dem Endgerät abgelegten Informationen kann mit dem erfindungsgemäßen Verfahren ein Endgeräte-übergreifendes und Nutzer-spezifisches Tracking realisiert werden, indem die wenigen Informationen des Cookies durch zusätzliche Informationen ergänzt werden, die in der Datenbank abgespeichert sind, auf die der Trackingserver Zugriff hat. Die Auswahl der richtigen, dem Nutzer zugeordneten Informationen aus der Datenbank erfolgt in Abhängigkeit von den in dem Cookie gespeicherten Informationen.

Ein Nutzer kann ein Internet-Angebot aufrufen, indem er einen auf einer von einem zweiten Webserver zur Verfügung gestellten Netzwerkseite dargestellten Verweis anklickt, der das Laden einer entsprechenden Netzwerk-Seite eines Online-Shops von einem ersten Webserver veranlasst. Die der angeforderten Netzwerkseite des Online-Shops entsprechenden Informationen werden an das Endgerät des Nutzers übertragen und dort verarbeitet, insbesondere in einem Browser auf einem Bildschirm des Endgeräts dargestellt. Dabei kann der Zugriff auf die Netzwerkseite des Online-Shops über das Internet nicht direkt, sondern über den Trackingserver erfolgen. Das bedeutet, dass der Verweis Informationen oder Anweisungen enthält, die den Nutzer zunächst zu dem Trackingserver leiten und erst danach an den ersten Webserver Online-Shop weiterleiten. Es ist sogar denkbar, dass die gesamte anschließende Datenkommunikation zwischen dem ersten Webserver des Online-Shops und dem Endgerät des Nutzers über den Trackingserver erfolgt. Auf diese Weise ist der Trackingserver stets über die Aktivitäten des Nutzers in dem Online-Shop im Bilde, insbesondere über einen Aufruf des Internet-Angebots und einen Einkauf bei einem Online-Shop durch den Nutzer, und kann die Identifizierung des Nutzers durchführen und danach entsprechende zusätzliche, dem identifizierten Nutzer zugeordnete Informationen in der Datenbank abspeichern.

Dabei kann der Trackingserver Nutzer-spezifische Informationen empfangen, insbesondere über ein Standard HTML-Cookie, ein Cache-Cookie (E-Tag), ein Flash-Cookie, ein HTML5-Cookie oder über einen Fingerabdruck des Browsers des Nutzers. Bspw. kann der Trackingserver ein zuvor von ihm auf dem Endgerät des Nutzers gesetztes Cookie auslesen, d.h. die darin abgespeicherten Nutzer-spezifischen Informationen werden über das Internet an den Trackingserver übertragen. Die Nutzer-spezifischen Informationen betreffen bspw. das Endgerät, von dem aus der Aufruf des Internet-Angebots erfolgte, Zeitpunkt und Art eines früheren Aufrufs eines Internet-Angebots, das früher aufgerufene Internet-Angebot selbst und/oder einen früheren Nutzer des Endgeräts. Die empfangenen Informationen können mit Informationen verglichen werden, die in einer Datenbank abgespeichert sind, auf die der Trackingserver Zugriff hat, und die einer Vielzahl von Nutzern zugeordnet sind. Wenn der Vergleich eine Übereinstimmung von zumindest einigen der empfangenen Informationen mit zumindest einigen der in der Datenbank abgespeicherten und einem bestimmten Nutzer zugeordneten Informationen ergibt, kann der Nutzer des Endgeräts eindeutig identifiziert werden. Falls eine zumindest teilweise Übereinstimmung zumindest eines Teils der empfangenen Informationen mit in der Datenbank abgespeicherten Informationen festgestellt wird, die verschiedenen Nutzern zugeordnet sind, können zusätzliche Auswahlkriterien zur eindeutigen Identifikation des Nutzers angewandt werden. Diese können bspw. eine Berücksichtigung des Tages oder der Uhrzeit des Aufrufs des Internet-Angebots oder der Art und des Inhalts des Internet-Angebots umfassen.

Es ist bspw. denkbar, dass in der Datenbank Informationen abgespeichert sind, wonach Nutzer A sehr häufig Musik oder Spiele von entsprechenden Webservern herunterlädt und vorwiegend abends im Internet surft, und Nutzer B häufig tagsüber Haushaltsartikel von einem Online-Shop kauft. Das in der Datenbank abgespeicherte Nutzerprofil des Nutzers A deutet eher auf einen Schüler oder Studenten hin, der tagsüber in der Schule ist oder lernt, wohingegen das Profil des Nutzers B eher auf eine Hausfrau hindeutet, die tagsüber einkauft, wenn Ehemann und Kinder aus dem Haus sind. Nach einem Vergleich der aus dem Cookie ausgelesenen Informationen mit den in der Datenbank abgespeicherten Informationen wird bspw. eine Übereinstimmung einer Email-Adresse mit der für Nutzer A und Nutzer B abgespeicherten Email-Adresse festgestellt, es könnte sich bei dem Nutzer, der den aktuellen Aufruf eines Internet-Angebots getätigt hat, also um Nutzer A oder Nutzer B handeln. Wenn der Aufruf des Internet-Angebots bspw. ein tagsüber getätigter Einkauf von Lebensmitteln ist, kann aufgrund der zusätzlichen Auswahlkriterien davon ausgegangen werden, dass es sich bei dem aktuellen Nutzer um den Nutzer B handelt. Trotz einer Übereinstimmung von Teilen der ausgelesenen Informationen mit Teilen der abgespeicherten Informationen für Nutzer A und Nutzer B ist somit eine eindeutige Identifizierung des Nutzers möglich. Durch Abspeichern einer Vielzahl anderer oder zusätzlicher Informationen in der Datenbank und durch Berücksichtigung anderer oder zusätzlicher Auswahlkriterien sind im Rahmen der vorliegenden Erfindung eine Vielzahl von Variationsmöglichkeiten zur eindeutigen Identifizierung des Nutzers denkbar.

Die von dem Trackingserver empfangenen Nutzer-spezifischen Informationen, bspw. die in dem Cookie abgespeicherten Informationen, erlauben zwar eine Zuordnung des für den Aufruf des Internet-Angebots genutzten Endgeräts zu bestimmten in der Datenbank gespeicherten Nutzer-Informationen. Sie ermöglichen aber alleine betrachtet keinen unmittelbaren Rückschluss auf die Person des Nutzers, so dass trotz des möglichen Endgeräte-übergreifenden Trackings des Nutzerverhaltens im Internet die datenschutzrechtlichen Anforderungen erfüllt werden können. In dem Cookie sind also keine Nutzer-spezifischen Informationen abgelegt, die für sich alleine betrachtet eine unmittelbare Identifizierung des Nutzers ermöglichen würden. Die Identifizierung des Nutzers ist erst durch einen Vergleich der empfangenen Informationen mit den in der Datenbank abgespeicherten Nutzer-spezifischen Informationen möglich.

Auf dem Endgerät kann ein Cookie gesetzt sein, wenn der Nutzer mit dem Endgerät früher bereits mindestens einmal das Internet-Angebot aufgerufen hat oder auf der entsprechenden Netzwerkseite war. Ein Cookie kann bereits dann auf dem Endgerät gesetzt werden, wenn der Nutzer irgendeine Netzwerkseite des das Internet-Angebot bereitstellenden Webservers aufruft. Alternativ oder zusätzlich ist auch denkbar, dass ein Cookie gesetzt wird, wenn der Nutzer eine bestimmte, dem aufgerufenen Internet-Angebot entsprechende Netzwerkseite aufruft. Nach der Identifikation des Nutzers können durch den Trackingserver nach erfolgter Konversion (Anmelden oder Einkaufen bei einem Online-Shop, Buchen eines Dienstes, etc.) zusätzliche, dem identifizierten Nutzer entsprechende Informationen in der Datenbank abgespeichert werden, um den Inhalt der Datenbank zu ergänzen und/oder zu aktualisieren. Die zusätzlichen abgespeicherten Informationen betreffen bspw. das aufgerufene Internet-Angebot, insbesondere die in dem Online-Shop getätigten Einkäufe, die realisierten Umsätze etc. Diese zusätzlichen Informationen können dann später zur Nutzer-spezifischen und Endgeräte-übergreifenden Beurteilung des Verweises herangezogen werden. Es werden also zusätzliche Informationen ein und desselben Nutzers aber von einer Vielzahl von unterschiedlichen Endgeräten zur Bewertung des Verweises herangezogen Dadurch ist eine besonders genaue und zuverlässige Beurteilung eines Verweises möglich. Dies gilt insbesondere dann, wenn eine Bewertung des Verweises anhand der Einzelbewertung von einer Vielzahl von Nutzern vorgenommen wird.

Alternativ ist es denkbar, dass das Endgerät bspw. durch Anklicken des Verweises auf einer zweiten Netzwerkseite unmittelbar, also ohne Zwischenschaltung des Trackingservers, an den ersten Webserver, der das Internet-Angebot zur Verfügung stellt, bspw. den Server eines Online-Shops, weitergeleitet wird. In diesem Fall erhält der Trackingserver, bspw. von dem Server des Online-Shops, eine Nachricht, um dem Trackingserver mitzuteilen, dass von einem bestimmten Endgerät aus über einen bestimmten Verweis, der auf einer bestimmten zweiten Netzwerkseite dargestellt wurde, ein bestimmtes Internet-Angebot aufgerufen wurde. In diesem Fall würde die gesamte anschließende Datenkommunikation unmittelbar zwischen dem ersten Webserver und dem Endgerät des Nutzers erfolgen. Im Anschluss an einen erfolgten Kauf bei dem Online-Shop oder wenn der Nutzer den Online-Shop wieder verlässt, kann der Trackingserver, bspw. von dem Webserver des Online-Shops, entsprechende Informationen über die Aktivitäten des Nutzers in dem Online-Shop erhalten und diese zusätzlichen Informationen in der Datenbank abspeichern.

Gemäß einer vorteilhaften Weiterbildung der vorliegenden Erfindung wird vorgeschlagen, dass die in der Datenbank abgespeicherten und einer Vielzahl von Nutzern zugeordneten Nutzer-Informationen bspw. für jeden Nutzer eine eindeutige Kennung, einen Personennamen, einen Usernamen, unter dem der Nutzer bei dem Webserver registriert ist, eine Lieferanschrift, eine Rechnungsanschrift, eine Kundennummer, eine Bankverbindung, eine Telefonnummer und/oder eine Email-Adresse des Nutzers umfassen.

Gemäß einer bevorzugten Ausführungsform der Erfindung wird vorgeschlagen, dass das auf dem Endgerät abgespeicherte Cookie Informationen betreffend einen früheren Nutzer in Form einer eindeutigen Kennung des früheren Nutzers enthält. Darüber hinaus ist es denkbar, dass das Cookie Informationen in Form eines Personennamens, eines Usernamens, unter dem der frühere Nutzer bei dem Webserver registriert ist, einer Lieferanschrift, einer Rechnungsanschrift, einer Kundennummer, einer Bankverbindung, einer Telefonnummer und/oder einer Email-Adresse des früheren Nutzers des Endgeräts enthält. Die eindeutige Kennung des früheren Nutzers oder die anderen in dem Cookie abgespeicherten Informationen können nach einem ersten Zugang des früheren Nutzers zu dem Online-Shop anhand von nutzerbezogenen Daten ermittelt werden, die der Nutzer zur Registrierung oder zum Anmelden bei dem Online-Shop eingegeben hat, und in dem Cookie abgespeichert werden.

Datenschutzrechtlich kann es bedenklich sein, wenn in einem Cookie auf einem Endgerät abgespeicherte Informationen unmittelbare Rückschlüsse auf die Person des Nutzers des Endgeräts zulassen. Um dies zu verhindern, wird vorgeschlagen, dass die in der Datenbank abgespeicherten und verschiedenen Nutzern zugeordneten Informationen und/oder die in dem auf dem Endgerät abgelegten Cookie enthaltenen Informationen von dem Trackingserver vor dem Abspeichern in der Datenbank bzw. vor dem Ablegen auf dem Endgerät in geeigneter Weise anonymisiert bzw. verschlüsselt werden. Dazu kann vorzugsweise eine Hashfunktion genutzt werden, mit der zumindest einige der Nutzer-spezifischen Informationen auf mindestens einem Hashwert abgebildet werden. Eine Hashfunktion (auch Streuwertfunktion) ist eine Abbildung, die eine große Eingabemenge (die Schlüssel) auf eine kleinere Zielmenge (die Hashwerte) abbildet - sie ist daher nicht injektiv. Dies ist eine Voraussetzung dafür, dass aus den in dem Cookie abgelegten Informationen nicht unmittelbar auf die Person des Nutzers geschlossen werden kann. Dabei kann die Eingabemenge auch Elemente mit unterschiedlichen Längen enthalten, die Elemente der Zielmenge haben dagegen meist eine feste Länge. Mittels einer Hashfunktion kann also die zu übertragene und abzuspeichernde Datenmenge verringert werden, wobei immer noch eine mittelbar Identifikation der einzelnen Nutzer durch Vergleich mit den in der Datenbank abgespeicherten Informationen möglich ist.

Gemäß einer weiteren bevorzugten Ausführungsform der Erfindung wird vorgeschlagen, dass die nach der Identifikation des Nutzers in der Datenbank zusätzlich abgespeicherten, dem identifizierten Nutzer zugeordneten Informationen einen Zeitpunkt des aktuellen Aufrufs des Internet-Angebots durch den Nutzer, eine Häufigkeit eines Aufrufs des Internet-Angebots durch den Nutzer, einen Zeitraum, während dem das Internet-Angebot von dem Nutzer aufgerufen wurde, eine nach dem Aufruf des Internet-Angebots durch den Nutzer erzielte Konversionsrate, einen nach dem Aufruf des Internet-Angebots durch den Nutzer erzielten Umsatz und/oder eine Anzahl von nach dem Aufruf des Internet-Angebots und nach realisierter Konversion durch den Nutzer getätigten Retouren umfasst.

In dem zuvor beschriebenen Beispiel der vorliegenden Erfindung erfolgt die Datenübertragung zwischen den einzelnen Endgeräten und Webservern sowie dem Trackingserver über das Internet. Das ist jedoch nur ein Beispiel für eine Kommunikationsverbindung, welche die Endgeräte, Webserver und den Trackingserver miteinander verbinden kann. Die Erfindung kann mit jeglicher Art von Kommunikationsverbindung, insbesondere beliebigen IP-Netzwerken, bspw. mit einem Intranet, realisiert werden. Ferner kann die Erfindung mit beliebig ausgestalteten Endgeräten realisiert werden, insbesondere mit unterschiedlichen Arten von Endgeräten. Vorteilhafterweise ist das Endgerät, über das der Nutzer das Internet-Angebot aufruft, ein Smartphone, ein Tablet-Computer, ein Laptop-Computer, ein Desktop-Computer oder ein beliebiges Rundfunkgerät mit Internet-Anschluss. Die Verbindung der Endgeräte zum Internet kann mittels einer Leitung, bspw. über einen Ethernet-Anschluss, oder kabellos, bspw. mittels WLAN oder WiFi, erfolgen. Ebenfalls denkbar wäre eine Verbindung der Endgeräte mit dem Internet über ein WAN-Netzwerk, bspw. über eine Mobilfunknetz-Verbindung.

Gemäß einer besonders bevorzugten Ausführungsform wird vorgeschlagen, dass das Endgerät des Nutzers ein Hybrid-Fernsehgerät nach dem HbbTV-Standard ist, das Informationen sowohl über eine Rundfunkverbindung als auch über eine Internetverbindung empfangen kann. Der Trackingserver kann über die Internetverbindung mit dem Fernsehgerät Informationen austauschen und über die Internetverbindung Nutzer-spezifische Informationen von dem HbbTV-Fernsehgerät empfangen. Bspw. kann der Trackingserver das auf dem Fernsehgerät abgelegte Cookie auslesen bzw. das Cookie auf dem Fernsehgerät ablegen. Der HbbTV-Standard ermöglicht es, auf dem Fernsehgerät ein Cookie, das eine eindeutige Kennung des Nutzers enthält, abzulegen, und bei dem erfindungsgemäßen Verfahren zum Endgeräte-übergreifenden Tracking des Nutzerverhaltens auch als Fernsehgeräte ausgebildete Endgeräte zu berücksichtigen. Der Empfang des Fernsehprogramms über die Rundfunkverbindung kann über Satellit oder Kabel erfolgen. Dabei ist die Rundfunkverbindung bspw. als ein DVB-Datenstream ausgebildet, der die für das auf dem Fernsehgerät darzustellende Fernsehprogramm erforderlichen Audio- und Videodaten enthält.

Das Fernsehgerät kann über WiFi oder WLAN kabellos oder über eine Ethernet-Verbindung an das Internet angebunden sein. Dazu verfügt das Fernsehgerät über geeignete WiFi-, WLAN- oder Ethernet-Adapter. Es ist möglich, das Fernsehgerät über in dem DVB-Datenstream enthaltene, d.h. zusammen mit dem Rundfunkprogramm übertragene Programme (z.B. Java-Applets) anzuweisen, über das Internet Verbindung zu einem bestimmten Webserver aufzunehmen, an diesen Informationen zu übertragen und/oder von diesem Informationen herunterzuladen. IP-fähige Fernsehgeräte verfügen häufig über Browser, die unter Umständen eine verminderte Funktionalität gegenüber einem Browser eines Computers oder Laptops aufweisen. Der Browser eines Fernsehgeräts kann die Informationen einer Netzwerkseite im Hintergrund, d.h. ohne dass eine laufende Rundfunkübertragung unterbrochen oder gestört wird, empfangen, verarbeiten und - falls gewünscht - auf dem Bildschirm des Fernsehgeräts darstellen. Im Rahmen der Verarbeitung empfangener Informationen können auch in die heruntergeladene Netzwerkseite eingebettete Programme, z.B. in Form von Java-Applets, auf dem Fernsehgerät ausgeführt und das Fernsehgerät dadurch veranlasst werden, bestimmte Handlungen vorzunehmen. Denkbar wäre bspw. dass das Fernsehgerät dadurch veranlasst wird, zu vorgegebenen Zeitpunkten, bspw. beim Hochfahren des Fernsehgeräts oder bei einem Wechsel des Fernsehprogramms bzw. des Fernsehsenders, oder in regelmäßigen zeitlichen Abständen über das Internet Informationen an den Trackingserver oder einen anderen Webserver, auf den der Trackingserver Zugriff hat, zu übermitteln. Diese Informationen umfassen bspw. eine Kennung des Endgeräts und/oder den aktuellen Fernsehsender, der auf dem Fernsehgerät momentan angezeigt wird. Das Übermitteln dieser Informationen erfolgt bspw. nach dem HbbTV-Standard.

Auf diese Weise ist es dem Trackingserver möglich zu ermitteln, welches Fernsehprogramm auf welchem Fernsehgerät wann dargestellt - und damit auch von dem Nutzer des Fernsehgeräts betrachtet - wird. Der Trackingserver verfügt über Informationen bezüglich des Fernsehprogramms, bspw. wann auf welchem Fernsehsender welches Fernsehprogramm gezeigt wird bzw. wurde und/oder welchen Inhalt das gezeigte Programm hat. Insbesondere verfügt der Trackingserver über Informationen, wann welche Werbung auf welchem Fernsehsender gezeigt wurde. Durch einen Vergleich der von dem Fernsehgerät empfangenen Informationen bzgl. des aktuell betrachteten Fernsehprogramms und den Informationen über das Fernsehprogramm kann der Trackingserver ermitteln, welche Werbung auf dem Fernsehgerät dargestellt wurde und damit von dem Nutzer des Fernsehgeräts betrachtet wurde.

Die Media-Informationen über den Inhalt des Fernsehprogramms können auf Webservern der Fernsehsender (z.B. ARD, ZDF, Arte, etc.) oder für mehrere Fernsehsender auf einem Webserver eines Rundfunkproviders (z.B. Kabelnetzbetreiber, Satellitenbetreiber, etc.) abgespeichert sein, und der Trackingserver kann bspw. über das Internet darauf Zugriff haben. Ebenso wäre es denkbar, dass der Betreiber des Trackingservers oder ein von ihm beauftragter Drittanbieter die Fernsehprogramme der verschiedenen Fernsehsendern beobachtet oder scannt und so ermittelt, wann welche Werbung auf welchem Fernsehsender gezeigt wird bzw. wurde. Die Media-Informationen können manuell, d.h. durch einen beauftragten Fernsehzuschauer, oder automatisiert, d.h. durch ein geeignetes Fernsehprogramm-Scan- und Analysetool, ermittelt werden. Die Media-Informationen sind vorzugsweise in einer Media-Datenbank abgespeichert, auf die der Trackingserver Zugriff hat oder die Teil des Trackingservers ist. Der Trackingserver vergleicht die von dem Fernsehgerät empfangenen Informationen betreffend den aktuell dargestellten Fernsehsender mit den dem Trackingserver vorliegenden Informationen, welcher Fernsehsender wann welches Fernsehprogramm zeigt, und kann so ermitteln, wann welches Fernsehprogramm auf welchem Endgerät dargestellt wurde, insbesondere welche Werbungen auf dem Fernsehgerät präsentiert wurde.

Um ein Endgeräte-übergreifendes Tracking des Nutzers im Internet zu ermöglichen, muss noch der Nutzer des Fernsehgeräts eindeutig identifiziert werden. Eine Identifikation des Nutzers des Fernsehgeräts erfolgt in ähnlicher Weise wie oben für ein als Smartphone oder PC ausgebildetes Endgerät ausführlich beschrieben. Sobald der Trackingserver von dem Fernsehgerät über das Internet Informationen bezüglich des aktuell dargestellten Fernsehsenders oder Fernsehprogramms erhält, startet der Trackingserver eine Identifikationsprozedur. Dabei prüft der Trackingserver zunächst, ob auf dem Fernsehgerät ein von dem Trackingserver gesetztes Cookie abgelegt ist. Falls ein solches Cookie abgelegt ist, liest der Trackingserver die darin abgelegten Informationen aus. Die ausgelesenen Informationen werden in dem Trackingserver mit denen in der Datenbank abgespeicherten, verschiedenen Nutzern zugeordneten Nutzer-Informationen verglichen und bei einer zumindest teilweisen Übereinstimmung die Identität des Nutzers ermittelt. Dabei können ggf. die zuvor beschriebenen zusätzlichen Auswahlkriterien und/oder die zuvor beschriebenen Hashfunktionen zum Generieren von entsprechenden Hashwerten zur Anwendung kommen.

Wenn der identifizierte Nutzer des Fernsehgeräts dann zu einem späteren Zeitpunkt über ein anderes Endgerät, bspw. über einen Desktop-Computer, einen Laptop-Computer, einen Tablet-Computer oder ein Smartphone, bei dem in der dem Nutzer zuvor präsentierten Fernsehwerbung beworbenen Online-Shop einkauft oder ein in der präsentierten Fernsehwerbung beworbenes Produkt kauft, erhält der Trackingserver entsprechende Informationen über das gekaufte Internet-Angebot bzw. über den Einkauf von einem Webserver des Online-Shops oder einem Webserver eines beauftragten Drittanbieters. Der Trackingserver kann den Käufer mit Hilfe des erfindungsgemäßen Verfahrens in einen Zusammenhang mit dem Nutzer bringen, dem zuvor über das Fernsehgerät die entsprechende Werbung präsentiert wurde. Mit anderen Worten, der Einkauf über ein beliebiges Endgerät kann in einen Zusammenhang mit der zuvor über das Fernsehgerät präsentierten Werbung gebracht werden.

Auf diese Weise kann die auf dem Fernsehgerät dargestellte Werbung als erfolgreich oder effizient bewertet werden, obwohl ein anschließender Einkauf weder unmittelbar nach der Darstellung der Werbung auf dem Fernsehgerät noch über das Fernsehgerät selbst getätigt wird. Das erlaubt eine besonders genaue und zuverlässige, insbesondere Endgeräte-übergreifende Bewertung der Werbung. Insbesondere ist es dadurch sogar möglich, über eine bestimmte technische Plattform (z.B. Rundfunk) geschaltete Werbung mit über eine andere technische Plattform (z.B. IP-Netzwerk) getätigten Einkäufen zu verknüpfen und eine besonders genaue und zuverlässige Bewertung der Werbung zu erzielen.

Die aus dem Stand der Technik bekannten Trackingverfahren erlauben lediglich eine Endgeräte-spezifische Bewertung von Internet- oder Rundfunkwerbung. Bei Verwendung eines bekannten Trackingverfahrens würde die Fernsehwerbung wahrscheinlich als ineffizient oder wenig erfolgreich eingestuft werden, da sie nur selten zu einem Einkauf über das Fernsehgerät führt. Entsprechendes kann auch für eine Online-Werbung über ein Smartphone gelten, die zwar häufig zur Informationssammlung jedoch nur selten für die tatsächliche Abwicklung eines Einkaufs genutzt werden. Trotzdem können die Fernsehwerbung und/oder die Smartphone-Werbung sehr wohl effizient und erfolgreich sein, wenn sie zu einem späteren Zeitpunkt dann doch zu einem Einkauf über ein anderes Endgerät, bspw. einen Desktop-Computer oder einen Tablet-Computer führen.

Gemäß einer vorteilhaften Weiterbildung der Erfindung wird vorgeschlagen, dass der Trackingserver die Nutzer-spezifischen Informationen empfängt, bspw. aus dem auf dem Endgerät abgelegten Cookie einliest, und derart verarbeitet, dass der Erfolg einer auf einem beliebigen Endgerät dargestellten Werbung bezogen auf den Nutzer ermittelt wird. Für jeden Nutzer wird also zunächst Endgeräte-übergreifend individuell ermittelt, ob die auf einem dem Nutzer zugeordneten Endgerät dargestellte Werbung eine Konversion auf einem beliebigen dem Nutzer zugeordneten Endgerät zur Folge hatte oder nicht. Andere Parameter, anhand derer ein Erfolg einer Werbung beurteilt werden kann, sind bspw. ein durch den Nutzer in dem beworbenen Online-Shop oder mit dem beworbenen Produkt erzielter Umsatz (je höher der Umsatz, desto besser die Bewertung der Werbung), eine Zeitdauer zwischen einem Erstkontakt des Nutzers mit dem beworbenen Online-Shop oder Produkt und dem tatsächlichen Einkauf (je kürzer die Zeitdauer, desto besser die Bewertung der Werbung), eine Zahlungszuverlässigkeit des Nutzers (z.B. Zeitdauer zwischen Einkauf und Zahlungseingang oder Anzahl der Mahnungen, je höher die Zahlungszuverlässigkeit des Nutzers, desto besser die Bewertung der Werbung) oder eine Anzahl an von dem Nutzer veranlassten Retouren (je geringer die Anzahl, desto besser die Bewertung der Werbung), etc.

Besonders bevorzugt ermittelt der Trackingserver den Erfolg der auf dem Endgerät dargestellten Werbung unter Berücksichtigung aller Endgeräte, über die dem Nutzer die Werbung präsentiert wurde und über die der Nutzer das Internet-Angebot aufgerufen hat bzw. die dem Nutzer zugeordnet werden können.

Gemäß einer anderen bevorzugten Ausführungsform der Erfindung wird vorgeschlagen, dass der Trackingserver den Erfolg der auf dem Endgerät dargestellten Werbung für mehrere Nutzer ermittelt. Anhand der Bewertung der Werbung für einzelne Nutzer kann für mehrere Nutzer ein unter Umständen gewichteter Durchschnittswert des Erfolgs der Werbung ermittelt werden. Eine Gewichtung kann bspw. einen durch einen Nutzer generierten Umsatz, seine Zahlungszuverlässigkeit oder die Anzahl der von dem Nutzer veranlassten Retouren berücksichtigen. Eine Gewichtung kann für einen Nutzer umso höher gewählt werden, je höher der Umsatz, je höher die Zahlungszuverlässigkeit und/oder je geringer die Anzahl der Retouren des Nutzers sind. Die Zusammenstellung der Gruppe von Nutzern, für die eine gemeinsame Bewertung der Werbung durchgeführt werden soll, kann anhand vorgegebener Parameter gewählt werden. So ist es bspw. denkbar, abhängig von dem Alter der Nutzer verschiedene Gruppen von Nutzern zusammenzustellen, so dass Aussagen getroffen werden können, für welche Altersgruppe die Werbung besonders erfolgreich ist und für welche Altersgruppen die Werbung weniger erfolgreich ist.

Der für einzelne oder mehrere Nutzer ermittelte Erfolg einer Werbung kann von dem Trackingserver dazu genutzt werden, eine Darstellung oder Ausgabe der Werbung in Zukunft in anderer Form, über einen anderen Anbieter und/oder auf anderen Endgeräten zu veranlassen, um den Erfolg der Werbung in Zukunft zu verbessern. Mit der vorliegenden Erfindung ist es bspw. möglich, auf einem Smartphone geschaltete Internet-Werbung oder auf einem Fernsehgerät geschaltete Rundfunk-Werbung weiterhin beizubehalten oder sogar zu intensivieren, weil diese Art der Werbung zu besonders vielen damit in Verbindung stehenden Einkäufen über andere Endgeräte führt. Variationsparameter, um die Darstellung der Werbung zu verändern, sind bspw.: Art der Werbung (z.B. Banner, nur textuell, auch graphisch, auch akustisch, statisches Bild, Abspielen eines Werbe-Videoclips, Fernsehwerbung in einem Werbeblock, Anzahl gleicher oder ähnlicher in kurzem zeitlichen Abstand hintereinander gezeigter Fernsehwerbungen für den gleichen Online-Shop oder für das gleiche Produkt, Einblenden von Werbung als Untertitel während einer laufenden Sendung), Zeitpunkt der Werbung (z.B. spät abends, tagsüber oder früh morgens, während einer Sportveranstaltung, während eines Spielfilms oder während einer Talkshow) oder Anbieter (z.B. Suchmaschinenanbieter, Betreiber eines Webservers, Anbieter eines Fernsehsenders). Die Erfindung erlaubt eine besonders flexible und effiziente Optimierung eines Werbebudgets eines Online-Shops, die nicht nur auf ein IP-Netzwerk beschränkt ist, sondern auch andere technische Plattformen (z.B. Rundfunkwerbung) mit einbeziehen kann.

Die beschriebene bevorzugte Ausführungsform der vorliegenden Erfindung wurde anhand eines Hybrid-Fernsehgeräts mit Internet-Anschluss beschrieben. Selbstverständlich kann die Erfindung auch mit beliebig anderen Rundfunkgeräten mit Internet-Anschluss, insbesondere mit einem Internet-Radio, in entsprechender Weise realisiert werden. Auch bei einem Internet-Radio ist es denkbar, dass ein DAB-Datenstrom, über den das eigentliche Radioprogramm übertragen wird, dem Radio über darin enthaltene und mit übermittelte Informationen vorgibt, von welchen Webservern zusätzliche Informationen heruntergeladen werden sollen. Im Rahmen der Verarbeitung der von den Webservern empfangenen Informationen in einem Browser des Internet-Radios können auch in die heruntergeladene Netzwerkseite eingebettete Programme, z.B. in Form von Java-Applets, auf dem Radiogerät ausgeführt und das Radiogerät dadurch veranlasst werden, bestimmte Handlungen vorzunehmen. Denkbar wäre bspw. dass das Radiogerät dadurch veranlasst wird, zu vorgegebenen Zeitpunkten, bspw. beim Hochfahren des Radiogeräts oder bei einem Wechsel des Radioprogramms bzw. Radiosenders, oder in regelmäßigen zeitlichen Abständen über das Internet Informationen an den Trackingserver oder einen anderen Webserver, auf den der Trackingserver Zugriff hat, zu übermitteln. Diese Informationen umfassen bspw. den aktuellen Radiosender, der auf dem Radiogerät momentan ausgegeben wird.

Weitere Merkmale und Vorteile der vorliegenden Erfindung werden nachfolgend anhand der Figuren näher erläutert. Es zeigen:
- Fig. 1: ein erfindungsgemäßes Computernetzwerk gemäß einer bevorzugten Ausführungsform zur Realisierung eines erfindungsgemäßen Verfahrens;
- Fig. 2: ein Ablaufdiagramm eines Teils eines erfindungsgemäßen Verfahrens gemäß einer bevorzugten Ausführungsform;
- Fig. 3: ein Ablaufdiagramm eines anderen Teils eines erfindungsgemäßen Verfahrens gemäß einer bevorzugten Ausführungsform;
- Fig. 4: ein Ablaufdiagramm eines erfindungsgemäßen Verfahrens gemäß einer bevorzugten Ausführungsform.

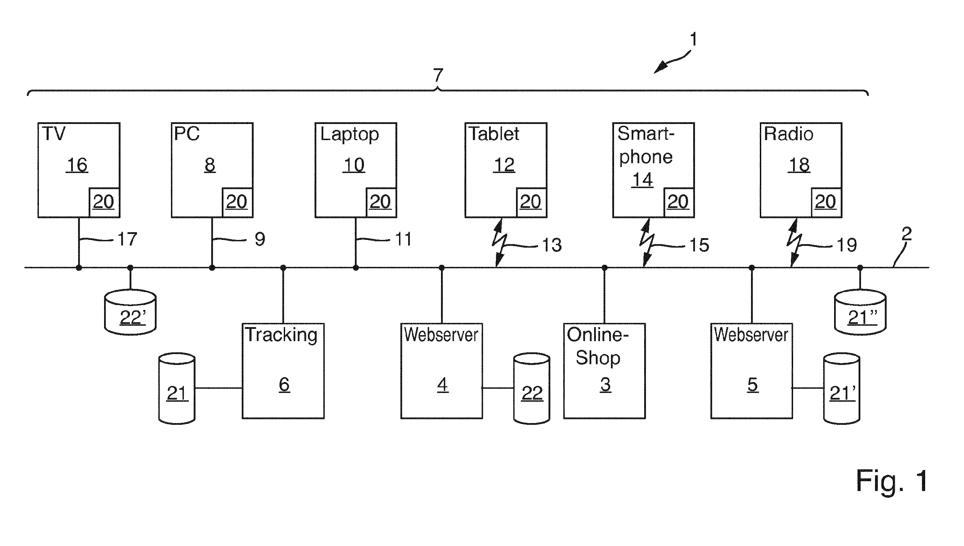

In Figur 1 ist ein erfindungsgemäßes Computernetzwerk in seiner Gesamtheit mit dem Bezugszeichen 1 bezeichnet. Das Computernetzwerk 1 umfasst ein Kommunikationsnetzwerk 2, das beispielsweise als ein IP (Internet Protocol)-Netzwerk, insbesondere als das Internet, ausgebildet ist. An das Internet 2 ist in an sich bekannter Weise ein Webserver 3 eines Online-Shops angeschlossen. Ferner können noch eine Vielzahl weiterer Webserver, beispielsweise die Webserver 4, 5, an das Internet 2 angeschlossen sein. Schließlich ist noch ein Trackingserver 6 an das Internet 2 angeschlossen.

Die Webserver 3, 4, 5 können Netzwerkseiten, beispielsweise in einem HTML-Format, zur Verfügung stellen, die über ebenfalls an das Internet 2 angeschlossene Endgeräte, insbesondere über einen auf den Endgeräten ablaufenden Browser, verarbeitet und dargestellt werden können.

Der Trackingserver 6 wird beispielsweise von dem Online-Shop 3 beauftragt, im Umfang eines vorgegebenen WerbeBudgets Werbung auf beliebigen Endgeräten zu schalten. Die Werbung umfasst beispielsweise jegliche Art von Internet-Werbung sowie jede Art von Rundfunk-Werbung. Um das zur Verfügung stehende Werbebudget besonders effizient einsetzen zu können, ermittelt der Trackingserver 6 nach dem erfindungsgemäßen Verfahren Endgeräte-übergreifend den Erfolg der geschalteten Werbung, indem sie bspw. mit den daraus resultierenden tatsächlichen Verkäufen des Online-Shops 3 verglichen wird.

In dem in Figur 1 gezeigten Ausführungsbeispiel sind einem Nutzer 7 verschiedene, auf unterschiedlichen technischen Plattformen beruhende Endgeräte zugeordnet, die alle an das Internet 2 angeschlossen sind. Der Nutzer 7 benutzt beispielsweise zu Hause oder am Arbeitsplatz einen Desktop-Computer 8, der über eine Ethernet-Verbindung 9 an das Internet 2 angeschlossen ist. Auf Geschäftsreisen benutzt der Nutzer 7 beispielsweise einen Laptop 10, der über eine Ethernet-Verbindung 11 an das Internet 2 angeschlossen ist. Selbstverständlich können sowohl der Desktop-Computer 8 als auch der Laptop-Computer 10 statt über eine Ethernet-Verbindung 9, 11 auch auf andere Weise, insbesondere kabellos, beispielsweise über eine WiFi-Verbindung, an das Internet 2 angeschlossen sein. Wenn der Nutzer 7 unterwegs ist, benutzt er beispielsweise in öffentlichen Verkehrsmitteln, im Zug oder im Flugzeug, einen Tablet-Computer 12, der in dem dargestellten Beispiel über eine WiFi-Verbindung 13 an das Internet 2 angeschlossen ist. In manchen Fällen, zum Beispiel zu Hause, am Arbeitsplatz oder unterwegs, greift der Nutzer 7 auf ein Smartphone 14 zurück, das beispielsweise über eine WAN (Wide Area Network)-Verbindung 15 an das Internet 2 angeschlossen ist. Selbstverständlich wäre es denkbar, dass der Tablet-Computer 12 statt über die WiFi-Verbindung 13 über eine WAN-Verbindung an das Internet 2 angeschlossen ist. Ebenso wäre es denkbar, dass das Smartphone 14 statt über die WAN-Verbindung 15 über eine WiFi-Verbindung an das Internet 2 angeschlossen ist.

Ferner kann der Nutzer 7 beispielsweise in seiner Freizeit über Rundfunkgeräte ein Rundfunkprogramm empfangen und konsumieren. In dem dargestellten Beispiel hat der Nutzer 7 beispielsweise Zugang zu einem Fernsehgerät 16, das über eine Ethernet-Verbindung 17 an das Internet 2 angeschlossen ist (sog. Hybrid-Fernsehgerät). Ferner steht dem Nutzer 7 ein Radiogerät 18 zur Verfügung, das über eine WiFi-Verbindung 19 an das Internet 2 angeschlossen ist. Selbstverständlich wäre es auch denkbar, das Fernsehgerät 16 über eine WiFi-Verbindung und das Radiogerät 18 über eine Ethernet-Verbindung an das Internet 2 anzuschließen. Bei der vorliegenden Erfindung wird jedoch in jedem Fall davon ausgegangen, dass von dem Nutzer 7 verwendete Rundfunkgeräte 16, 18 einen Internet-Anschluss aufweisen, mit dem Internet 2 in Verbindung stehen und über dieses mit Webservern, bspw. den Servern 3, 4, 5, Informationen austauschen können. Darüber hinaus verfügen die Rundfunkgeräte 16, 18 über Rundfunkverbindungen (nicht dargestellt), bspw. in Form eines DVB (Digital Video Broadcasting)-Datenstreams für das Fernsehgerät 16 oder in Form eines DAB (Digital Audio Broadcasting)-Datenstreams für das Radiogerät 18, über die das Rundfunkprogramm an die Geräte 16, 18 übermittelt wird.

Auf den Endgeräten 8, 10, 12, 14, 16, 18 können auf entsprechenden Bildschirmen beziehungsweise in entsprechenden Browsern Netzwerkseiten dargestellt werden. Die entsprechenden Informationen der dargestellten Netzwerkseiten werden zuvor über das Internet 2 von einem oder mehreren Webservern 3, 4, 5 an das die Netzwerkseite anfordernde Endgerät 8, 10, 12, 14, 16, 18 übertragen. Die Anforderung der Netzseite kann durch eine Eingabe der entsprechenden Netzwerkadresse (URL) durch den Nutzer 7 in den Browser des Endgeräts 8, 10, 12, 14, 16, 18 oder durch Anklicken eines entsprechenden Verweises (sog. Link) auf einer zuvor angezeigten Netzwerkseite erfolgen. Es ist aber auch denkbar, dass das Endgerät 8, 10, 12, 14, 16, 18 durch ein in einem empfangenen Datenstrom eingebettetes Programm, z.B. ein Java-Applet, zum Aufruf einer bestimmten Netzwerkseite veranlasst wird. Die Darstellung eine Netzwerkseite kann in dem Fernsehgerät 16 aber insbesondere in dem Radiogerät 18 unter Umständen nur in beschränktem Umfang erfolgen. Allerdings sind die Browser der Rundfunkgeräte 16, 18 in gleichem Maße zur Verarbeitung der empfangenen Daten einer Netzwerkseite in der Lage wie die IP-Endgeräte 8, 10, 12, 14.

Auf den dargestellten Netzwerkseiten kann eine Internet-Werbung beliebiger Art mit ausgegeben und dem Nutzer 7 präsentiert werden. Das Platzieren der jeweiligen Internet-Werbung auf entsprechenden Netzwerkseiten kann durch den Trackingserver 6 veranlasst werden. In der Praxis ist es in der Regel so, dass der Nutzer 7 eine bestimmte Netzwerkseite anfordert und dass der Webserver 3, 4, 5, der die Netzwerkseite zur Verfügung stellt, sofern von dem Trackingserver 6 veranlasst, automatisch die entsprechenden Inhalte der Internet-Werbung beschafft, beispielsweise von einem Werbe-Webserver, und in die an das anfragende Endgerät 8, 10, 12, 14 übertragenen Informationen der Netzwerkseite einbettet, so dass die Internet-Werbung zusammen mit der angeforderten Netzwerkseite auf dem Bildschirm des entsprechenden Endgeräts 8, 10, 12, 14, 16, 18 dargestellt und dem Nutzer 7 präsentiert wird.

An die Rundfunkgeräte 16, 18 kann zudem noch über den empfangenen Datenstrom des Rundfunkprogramms Rundfunkwerbung beliebiger Art übertragen und über die Rundfunkgeräte ausgegeben werden. Der Trackingserver 6 kann veranlassen, dass eine bestimmte Werbung bei einem bestimmten Rundfunksender zu einer bestimmten Zeit über die Rundfunk-Endgeräte 16, 18 ausgestrahlt wird. In diesem Zusammenhang kann der Trackingserver 6 bspw. vorab entsprechende Werbezeiten bei einem oder mehreren Rundfunkanbietern oder Fernsehsendern buchen. Die Rundfunkwerbung wird dann als Teil des Fernsehprogramms, beispielsweise in dem DVB-Datenstream an das Fernsehgerät 16 oder als DAB-Datenstream an das Radiogerät 18 übermittelt. Selbstverständlich ist es aber auch denkbar, dass die Platzierung der Rundfunkwerbung nicht durch den Trackingserver 6 veranlasst ist, sondern von einem Dritten, beispielsweise einem anderen Trackingserver oder dem Online-Shop 3 selbst, ohne dass der Trackingserver 6 davon Kenntnis hat.

Durch die dem Nutzer 7 präsentierte Werbung kann dieser dazu veranlasst werden, über das Internet 2 auf einen beworbenen Online-Shop 3 zu gehen oder sich Informationen über ein beworbenes Produkt einzuholen. In manchen Fällen kann der Nutzer 7 durch die ihm präsentierte Werbung sogar dazu veranlasst werden, bei dem beworbenen Online-Shop 3 einzukaufen oder ein beworbenes Produkt zu erwerben. Da die dem Nutzer 7 präsentierte Werbung auf unterschiedlichen technischen Plattformen ausgestrahlt wird, nämlich zum einen über das Internet 2 an die IP-Endgeräte 8, 10, 12, 14 und zum anderen über ein Rundfunkprogramm an die Rundfunk-Endgeräte 16, 18, ist es erforderlich, dass der Trackingserver 6 eine Endgeräte-übergreifende und Nutzer-spezifische Bewertung der platzierten Werbung vornehmen kann, um das ihm von dem Online-Shop 3 zur Verfügung gestellte Werbe-Budget möglichst effizient einzusetzen. Zu diesem Zweck schlägt die vorliegende Erfindung ein besonderes Verfahren vor, das nachfolgend im Detail beschrieben wird.

Das vorliegende Verfahren geht von einem Internet-Angebot aus, das von einem Webserver, beispielsweise dem Online-Shop 3, zur Verfügung gestellt wird. Dieses Internet-Angebot kann von dem Nutzer 7 von einem beliebigen Endgerät 8, 10, 12, 14, 16, 18 aus aufgerufen werden. Ferner wird davon ausgegangen, dass dem Nutzer 7 über eines oder mehrere der Endgeräte 8, 10, 12, 14, 16, 18 Werbung präsentiert wird. Dabei kann es sich um Internet- oder Online-Werbung insbesondere für die IP-Endgeräte 8, 10, 12, 14 und/oder um Rundfunk-Werbung insbesondere für die Rundfunk-Endgeräte 16, 18 handeln. Selbstverständlich wäre es aber auch denkbar, dass den Rundfunk-Endgeräten 16, 18 Online-Werbung präsentiert wird. Die vorliegende Erfindung schlägt die technischen Voraussetzungen vor, um eine möglichst zuverlässige Endgeräte-übergreifende Bewertung der präsentierten Werbung realisieren zu können. Diese wiederum erlaubt eine besonders effiziente Optimierung der platzierten Werbung und damit einen besonders effizienten Einsatz des zur Verfügung stehenden Werbebudgets.

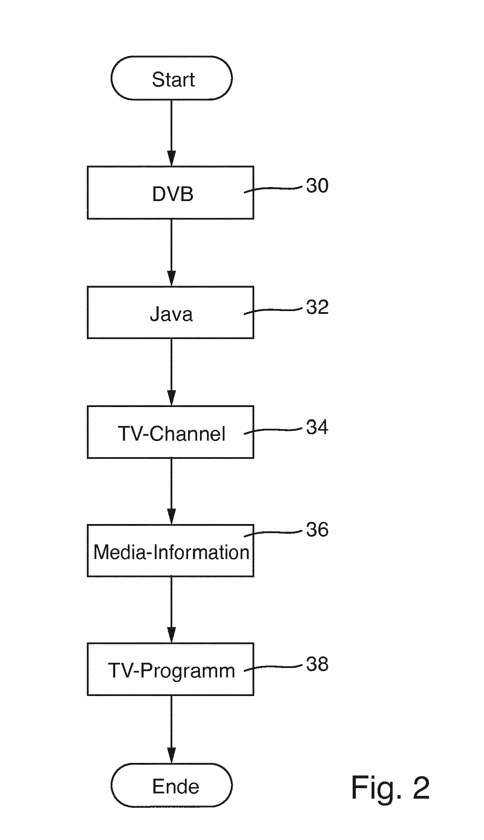

Bei den Endgeräte 8, 10, 12, 14 wird die Darstellung der Internet-Werbung auf den von dem Nutzer 7 aufgerufenen Netzwerkseiten durch den Trackingserver 6 veranlasst oder der Trackingserver 6 erhält zumindest Informationen über die Präsentation der Werbung. Somit verfügt der Trackingserver 6 bereits über Informationen darüber, welchem Nutzer 7 welche Werbung wann angezeigt wurde. Dies ist bei den Rundfunk-Endgeräten 16, 18 jedoch nicht zwangsläufig der Fall, da die dort dargestellte Werbung über das Rundfunkprogramm übermittelt wird und nicht zwangsläufig auf eine Initiative des Trackingservers 6 zurückgeht. Aus diesem Grund ist es zunächst erforderlich, dass der Trackingserver 6 ermittelt, welchem Nutzer 7 welche Werbung über die Rundfunk-Endgeräte 16, 18 präsentiert wurde. Dies wird nachfolgend anhand der Figur 2 näher erläutert.

Zu diesem Zweck kann der Trackingserver 6 in einem ersten Schritt 30 das Fernsehgerät 16 beispielsweise über einen DVB-Datenstrom veranlassen, von einem bestimmten Webserver, beispielsweise dem Trackingserver 6 oder einem der Webserver 3, 4, 5, über das Internet 2 Informationen herunterzuladen. Das Fernsehgerät 16 kann bspw. in Form einer URL, die es über den DVB-Datenstrom empfängt, zum Herunterladen der entsprechenden Netzwerkseite veranlasst werden. Das Herunterladen der Informationen kann über den HbbTV-Standard für Hybrid-Fernsehgeräte 16 über das Internet 2 erfolgen. Die von dem Fernsehgerät 16 heruntergeladenen Informationen können in einem Browser im Hintergrund verarbeitet und - falls gewünscht - in Form einer Netzwerkseite auf dem Bildschirm dargestellt werden.

Im Rahmen der Verarbeitung der von dem Webserver empfangenen Informationen können in einem Schritt 32 eingebettete Daten, zum Beispiel in Form eines kleinen Programms, insbesondere eines Java-Applets, auf dem Fernsehgerät 16 ausgeführt werden. Es ist denkbar, dass ein Programm in eine heruntergeladene Netzwerkseite einbettet ist, welches das Fernsehgerät 16 veranlasst, zu vorgegebenen Zeitpunkten, beispielsweise beim Hochfahren des Fernsehgeräts 16 oder beim Wechsel des Fernsehsenders, oder in regelmäßigen zeitlichen Abständen über das Internet 2 Informationen an den Trackingserver 16 oder einen anderen Webserver, auf den der Trackingserver 16 Zugriff hat, zu übermitteln. Dies ist durch den Schritt 34 repräsentiert. Die übermittelten Informationen umfassen beispielsweise eine eindeutige Kennung des Fernsehgeräts 16, insbesondere dessen IP-Adresse, und/oder den aktuellen Fernsehsender (TV-Channel), der auf dem Fernsehgerät 16 momentan angezeigt wird. Das Übermitteln dieser Informationen erfolgt beispielsweise nach dem HbbTV-Standard.

Der Trackingserver 6 hat Zugriff oder verfügt über Media-Informationen betreffend das Fernsehprogramm auf verschiedenen Fernsehsendern. Die Media-Informationen über den Inhalt des Fernsehprogramms können von den Fernsehsendern selbst (z.B. ARD, ZDF, Arte, etc.) zur Verfügung gestellt werden. Ebenso wäre es denkbar, dass der Betreiber des Trackingservers 6 oder ein von ihm beauftragter Drittanbieter die Fernsehprogramme der verschiedenen Fernsehsendern beobachtet und so die Media-Informationen ermittelt, insbesondere wann welche Werbung auf welchem Fernsehsender gezeigt wird bzw. wurde. Schließlich wäre es auch denkbar, das Fernsehprogramm der verschiedenen Fernsehsender zu scannen und mittels eines geeigneten Analyse-Tools auszuwerten, um die Media-Informationen automatisiert zu ermitteln. Die Media-Informationen sind bspw. auf Media-Servern der Fernsehsender oder für mehrere Fernsehsender auf einem Media-Server eines Rundfunkproviders (z.B. Kabelnetzbetreiber, Satellitenbetreiber, etc.), bspw. auf dem Webserver 4, abgespeichert. Besonders bevorzugt ist es, wenn die Media-Informationen in einer Media-Datenbank 22; 22' abgespeichert sind. Der Trackingserver 6 kann bspw. über das Internet 2 auf den Media-Server 4 und/oder die Media-Datenbank 22 zugreifen. Auf diese Weise hat der Trackingserver 6 Informationen darüber, wann auf welchen Fernsehsender welche Werbung gezeigt worden ist.

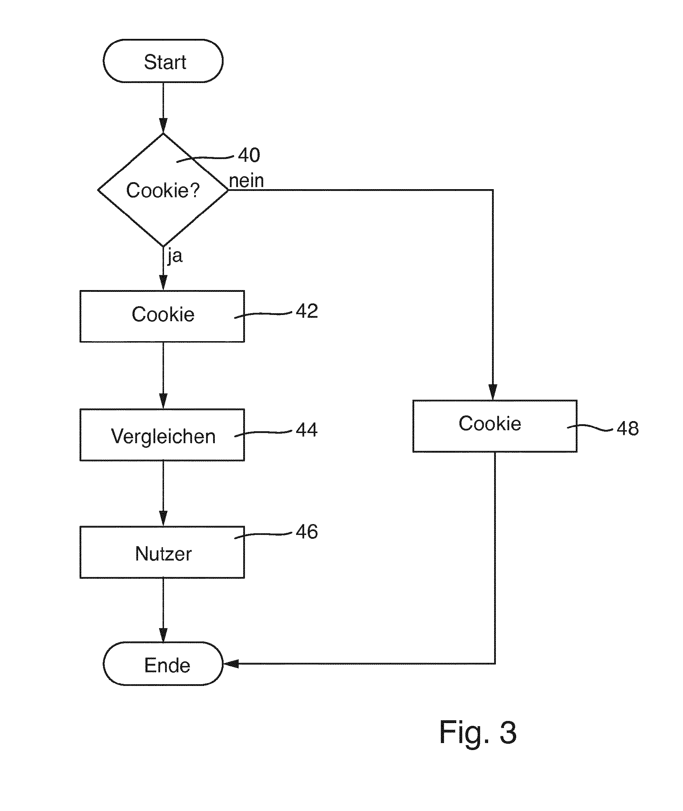

Der Trackingserver 6 kann die von dem Fernsehgerät 16 empfangenen Informationen mit den Media-Informationen vergleichen. Dies ist im Schritt 36 dargestellt. Auf diese Weise kann der Trackingserver 6 im Schritt 38 ermitteln, welches Fernsehprogramm (TV-Program), insbesondere welche Werbung auf welchem Endgerät 8, 10, 12, 14, 16, 18 dargestellt und einem Nutzer 7 präsentiert wurde. Um zusätzlich noch die Identität des Nutzers 7 ermitteln zu können, wird ein in Figur 3 gezeigtes Verfahren vorgeschlagen.

Wenn der Trackingserver 6 im Schritt 34 von dem Fernsehgerät 16 Informationen erhält (umfassend z.B. eine Kennung des Fernsehgeräts 16, den aktuell aktiven Fernsehsender, etc.), kann der Trackingserver 6 parallel zu den Schritten 36, 38 oder im Anschluss daran in einem Schritt 40 prüfen, ob auf dem Fernsehgerät 16 zu einem früheren Zeitpunkt von dem Server 6 ein Cookie 20 abgelegt worden ist. Es sollte sich um ein von dem Trackingserver 6 zuvor auf dem Fernsehgerät 16 abgelegtes Cookie 20 handeln, damit der Trackingserver 6 dieses auch auslesen kann. Cookies können in der Regel nämlich immer nur von denjenigen Servern ausgelesen werden, die das Cookie zuvor auch gesetzt haben.

In dem dargestellten Beispiel empfängt der Trackingserver 6 Nutzer-spezifische Informationen durch Auslesen eines herkömmlichen Standard Cookies 20. Es ist jedoch auch denkbar, dass der Trackingserver 6 die Nutzer-spezifischen Informationen alternativ oder zusätzlich mittels eines Flash-Cookies, eines HTML5-Cookies, eines Cache-Cookies oder mittels einer beliebig anderen Art von Datei empfängt, die auf dem Endgerät, bspw. dem Fernsehgerät 16, abgespeichert ist. Ebenso wäre es denkbar, dass der Trackingserver 6 die Nutzer-spezifischen Informationen mittels eines Fingerprints des Nutzers 7 empfängt.

Falls ein solches Cookie 20 auf dem Endgerät 16 abgelegt worden ist ("ja"), kann dieses in einem Schritt 42 ausgelesen werden, d.h. das Endgerät 16 wird veranlasst, die in dem Cookie 20 gespeicherten Informationen über das Internet 2 an den Trackingserver 6 zu übertragen. Die von dem Trackingserver 6 empfangenen Nutzer-spezifischen Informationen, bspw. die in dem Cookie 20 abgespeicherten Informationen, können eine eindeutige Kennung des Fernsehgeräts 16 und/oder Informationen betreffend einen früheren Nutzer des Endgeräts 16 in Form einer eindeutigen Kennung des früheren Nutzers sein. Ein früherer Nutzer ist ein Nutzer des Fernsehgeräts 16, von dem früher schon einmal bei anderer Gelegenheit Informationen an den Trackingserver 6 übertragen wurden. Eine eindeutige Kennung des früheren Nutzers kann beispielsweise in Form von dessen Personennamens, dessen Usernamens, unter dem der frühere Nutzer bei einem Webserver registriert ist, dessen Lieferanschrift, dessen Rechnungsanschrift, dessen Kundennummer, dessen Bankverbindung, dessen Telefonnummer und/oder dessen Email-Adresse in dem Cookie 20 abgespeichert sein. Um eine Anonymisierung der in dem Cookie 20 abgespeicherten Informationen zu erzielen, wäre es denkbar, die Nutzer-spezifischen Informationen, bspw. die in dem Cookie 20 abgespeicherte Informationen, zunächst im Rahmen einer Hashfunktion auf einem Hashwert abzubilden und diesen Hashwert dann in dem Cookie 20 zu speichern bzw. an den Trackingserver 6 zu übertragen.

Die aus dem Cookie 20 in Schritt 42 ausgelesenen Informationen werden mit Nutzer-Informationen bezüglich einer Vielzahl von Nutzern verglichen, die dem Trackingserver 6 zur Verfügung stehen. Die dem Trackingserver 6 zur Verfügung stehenden Nutzer-Informationen bezüglich der Vielzahl an Nutzern können beispielsweise in einer Datenbank 21; 21'; 21" des Trackingservers 6 oder eines beliebig anderen Webservers 5, auf den der Trackingserver 6 über das Internet 2 Zugriff hat, abgespeichert sein. Die in der Datenbank 21; 21'; 21" abgespeicherten Nutzer-Informationen sind zuvor gesammelt worden, beispielsweise indem Nutzer im Rahmen ihrer Einkäufe bei dem Online-Shop 3 oder einem anderen Online-Shop oder im Rahmen einer Registrierung bei einem Online-Shop diese Informationen selbst zur Verfügung gestellt haben. Alternativ oder zusätzlich können diese Informationen auch von Drittanbietern bezogen worden sein.

Wenn die in dem Cookie 20 abgespeicherten Informationen in verschlüsselter Form, beispielsweise als ein Hashwert, abgespeichert sind, sollten auch die in der Datenbank 21; 21'; 21" abgespeicherten Informationen als Hashwerte abgespeichert sein. In einem Schritt 44 werden die aus dem Cookie 20 ausgelesenen Informationen mit den in der Datenbank 21; 21'; 21" abgespeicherten Informationen des Trackingservers 6 verglichen. Bei einer zumindest teilweisen Übereinstimmung der aus dem Cookie 20 ausgelesenen Informationen mit den einem bestimmten Nutzer zugeordneten in der Datenbank 21; 21'; 21" abgespeicherten Informationen kann der Nutzer 7 eindeutig als Fernsehzuschauer für das Fernsehgerät 16 identifiziert werden. Die Identifizierung des Nutzers 7 ist durch den Schritt 46 repräsentiert. Der Trackingserver 6 verfügt somit über Informationen, welchem Nutzer 7 das Fernsehgerät 16 zugeordnet ist. Anhand der Informationen aus der Datenbank 22; 22' wann welches Fernsehprogramm bei welchem Fernsehgerät 16 dargestellt worden ist, kann der Trackingserver 6 des Weiteren ermitteln, welchem Nutzer 7 welches Fernsehprogramm, insbesondere welche Werbung, gezeigt wurde. Durch Verknüpfen der Informationen aus Schritt 38 (welches Fernsehprogramm wurde auf dem Fernsehgerät 16 dargestellt) mit den Informationen aus Schritt 46 (welcher Nutzer 7 ist dem Fernsehgerät 16 zugeordnet) kann der Trackingserver 6 also eine Verknüpfung zwischen der ausgegebenen Werbung und dem Nutzer 7 herstellen. Es ist somit eine Nutzer-spezifische Zuordnung des Fernsehprogramms möglich.

Wenn die von dem Trackingserver 6 empfangenen Nutzer-spezifischen Informationen, bspw. die in dem Cookie 20 abgespeicherten Informationen, in verschlüsselter Form, beispielsweise als ein Hashwert, vorliegen, wäre es alternativ auch denkbar, die in dem Trackingserver 6 empfangenen verschlüsselten Informationen zunächst zu entschlüsseln, bspw. indem aus dem Hashwert wieder die ursprünglichen Informationen generiert werden, bevor sie mit den in der Datenbank 21; 21'; 21" abgespeicherten Informationen verglichen werden. In diesem Fall müssen die in der Datenbank 21; 21'; 21" abgespeicherten Nutzer-Informationen nicht in verschlüsselter Form, bspw. als Hashwerte abgespeichert werden.

Das oben beispielhaft für das Fernsehgerät 16 beschriebene Verfahren kann in entsprechender Weise auch für das Radiogerät 18 eingesetzt werden. Der Trackingserver 6 kann also auf entsprechende Weise auch ermitteln, welches Radioprogramm welchem Nutzer 7 ausgegeben wurde. Nachdem der Trackingserver 6 die Rundfunkgeräte 16, 18 einem bestimmten Nutzer 7 zugeordnet hat, kann der Trackingserver 6 unter Berücksichtigung der von den Rundfunkgeräten 16, 18 empfangenen Informationen bezüglich des aktuellen Rundfunksenders ermitteln, welche Werbung dem Nutzer 7 über welches Rundfunkgerät 16, 18 präsentiert wurde.

Falls sich bei der Abfrage 40 ergibt, dass auf dem Fernsehgerät 16 noch kein geeignetes Cookie 20 abgelegt ist, legt der Trackingserver 6 in einem Schritt 48 ein Cookie auf dem Endgerät 16 ab, in dem Informationen betreffend das Endgerät 16 und/oder den aktuellen Nutzer 7 des Endgeräts 16 abgelegt sind. Bei einem Auslesen des Cookies 20 zu einem späteren Zeitpunkt wären die in dem Cookie 20 abgespeicherten Nutzer-Informationen dann als Informationen betreffend einen früheren Nutzer zu betrachten.

Im Fall der IP-Endgeräte 8, 10, 12, 14 erhält der Trackingserver 6 unmittelbar nachdem der Nutzer 7 über eines der Endgeräte 8, 10, 12, 14 ein Internet-Angebot aufgerufen hat Informationen betreffend den Aufruf, das Internet-Angebot, den das Internet-Angebot zur Verfügung stellenden Webserver 3, 4, 5 und/oder das Endgerät 8, 10, 12, 14. Diese Informationen umfassen insbesondere auch eine Aussage darüber, ob der Nutzer 7 das Internet-Angebot über einen auf einer Netzwerkseite dargestellten Verweis (z.B. eine auf der Internetseite dargestellte Online-Werbung) oder durch direkte Eingabe der entsprechenden URL des Internet-Angebots aufgerufen hat. Auch bei IP-Endgeräte 8, 10, 12, 14 verfügt der Trackingserver 6 somit über Informationen darüber, welche Werbung dem Nutzer 7 präsentiert wurde.

Somit verfügt der Trackingserver 6 unabhängig von der Art der Endgeräte 8, 10, 12, 14, 16, 18 über Informationen, welche Werbung dem Nutzer 7 präsentiert wurde.

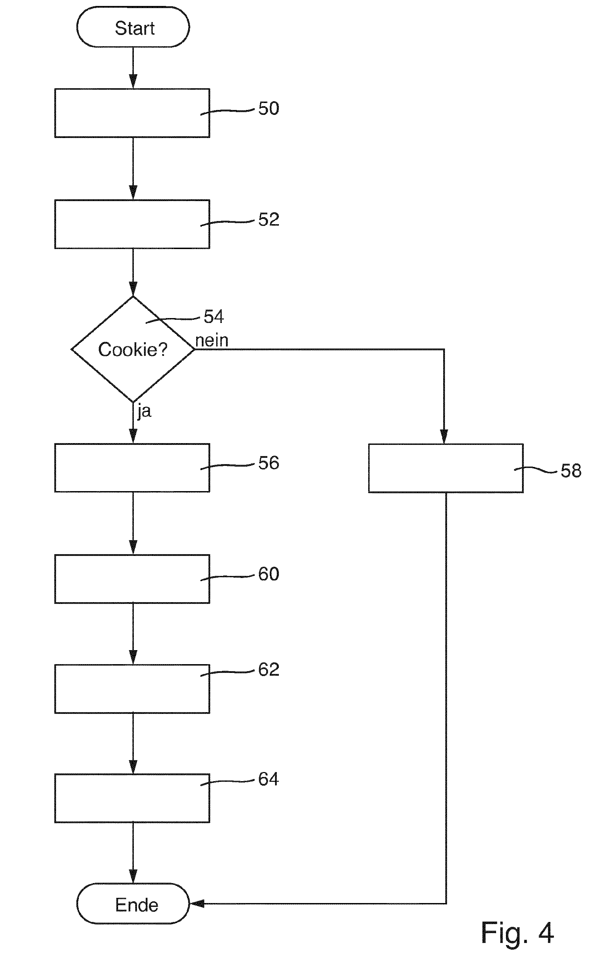

Nachfolgend wird ein Beispiel für das erfindungsgemäße Verfahren anhand der Figur 4 näher erläutert. Wenn nun der Nutzer 7 in einem Schritt 50 ein Internet-Angebot von einem Webserver, beispielsweise eine Netzwerkseite des Online-Shops 3, über eines der Endgeräte 8, 10, 12, 14, 16, 18 aufruft, wird der Trackingserver 6 darüber informiert. Dies kann entweder dadurch erfolgen, dass der Aufruf der Netzwerkseite des Online-Shops 3 mittelbar über den Trackingserver 6 erfolgt und die gesamte Kommunikation zwischen dem Endgerät 8, 10, 12, 14, 16, 18 und dem Webserver 3 über den Trackingserver 6 erfolgt. Ebenso wäre es denkbar, dass der Online-Shop 3 beim Aufruf einer Netzwerkseite durch den Nutzer 7 den Trackingserver 6 darüber informiert. Die Informationen, die der Trackingserver 6 in diesem Zusammenhang in einem Schritt 52 über das Internet 2 erhält, können den Aufruf der Netzwerkseite des Online-Shops 3 selbst, das aufgerufene Internet-Angebot, den das Internet-Angebot zur Verfügung stellenden Webserver, bspw. den Webserver 3, und/oder das von dem Nutzer 7 verwendete Endgerät 8, 10, 12, 14, 16, 18 betreffen.

Nach Empfang der Informationen bezüglich des Aufrufs des Internet-Angebots durch den Nutzer 7 versucht der Trackingserver 6 ein von diesem zuvor auf dem von dem Nutzer 7 für seinen Aufruf verwendeten Endgerät 8, 10, 12, 14, 16, 18 abgelegtes Cookie auszulesen. Dazu prüft der Trackingserver 6 in einem Schritt 54, ob auf dem von dem Nutzer 7 für den Aufruf verwendeten Endgerät 8, 10, 12, 14, 16, 18 ein geeignetes Cookie 20 abgelegt ist. Falls dem so ist ("ja"), liest der Trackingserver 6 in einem Schritt 56 das Cookie 20 aus. Das Cookie 20 umfasst Informationen betreffend einen früheren Nutzer des Endgeräts 8, 10, 12, 14, 16, 18, das der Nutzer 7 für seinen Aufruf verwendet, und/oder das Endgerät 8, 10, 12, 14, 16, 18 selbst. Die Informationen betreffend einen früheren Nutzer können eine eindeutige Kennung, ein Personenname, ein Username, unter dem der frühere Nutzer bei dem Webserver 3 registriert ist, eine Lieferanschrift, eine Rechnungsanschrift, eine Kundennummer, eine Bankverbindung, eine Telefonnummer und/oder eine Email-Adresse des früheren Nutzers sein. Somit verfügt der Trackingserver 6 über Informationen, über welches der Endgeräte 8, 10, 12, 14, 16, 18 das Internet-Angebot des Online-Shops 3 aufgerufen wurde.

In der Regel wird auf dem Endgerät 8, 10, 12, 14, 16, 18 ein Cookie 20 des Trackingservers 6 abgelegt sein, das im Schritt 56 eingelesen werden kann. Es ist aber auch denkbar, dass bei einem erstmaligen Aufruf des Internet-Angebots des Online-Shops 3 durch das Endgerät 8, 10, 12, 14, noch kein Cookie 20 auf dem Endgerät 8, 10, 12, 14, 16, 18 abgelegt ist. In diesem Fall wird auf dem Endgerät 8, 10, 12, 14, 16, 18 ein Cookie 20 abgelegt, das Informationen betreffend das Endgerät 8, 10, 12, 14, 16, 18, den Aufruf und/oder das aufgerufene Internet-Angebot enthält.

Falls in Schritt 56 das Cookie 20 ausgelesen worden ist, werden im Rahmen der Verarbeitung der ausgelesenen Informationen diese in einem Schritt 60 von dem Trackingserver 6 mit den in der Datenbank 21; 21'; 21" des Trackingservers 6 oder eines anderen Webservers 5, auf den der Trackingserver 6 Zugriff hat, abgespeicherten Nutzer-Informationen verglichen, die verschiedenen Nutzern zugeordnet sind. Bei einer zumindest teilweisen Übereinstimmung der aus dem Cookie 20 ausgelesenen Informationen und der in der Datenbank 21; 21'; 21" abgespeicherten Informationen, die den verschiedenen Nutzern zugeordnet sind, kann in einem Schritt 62 durch den Trackingserver 6 der Nutzer 7 identifiziert werden, der das Internet-Angebot aufgerufen hat. Die Identifikation des Nutzers 7 ist bereits möglich, unmittelbar nachdem dieser den Online-Shop 3 betreten hat, das heißt die entsprechende Netzwerkseite des Online-Shops 3 aufgerufen hat, ohne dass der Nutzer 7 in dem Online-Shop 3 eingekauft hat.

Anschließend kann der Trackingserver 6 in einem Schritt 64 das Abspeichern von zusätzlichen, dem identifizierten Nutzer 7 zugeordneten Informationen in der Datenbank 21; 21'; 21" veranlassen, wobei die zusätzlichen Informationen das aufgerufene Internet-Angebot betreffen. Insbesondere können die zusätzlichen Informationen einen Zeitpunkt des Aufrufs, einen Inhalt des Internet-Angebots und - falls der Nutzer 7 in dem Online-Shop 3 eingekauft hat - den dadurch erzielten Umsatz betreffen. Ferner ist es denkbar, dass die zusätzlichen Informationen in dem Fall, dass der Nutzer 7 in dem Online-Shop 3 eingekauft hat, zusätzliche Angaben betreffen, die der Nutzer 7 im Rahmen der Kaufabwicklung gemacht hat, wie beispielsweise eine Email-Adresse, eine Kundennummer, einen Personennamen des Nutzers 7, einen Usernamen, unter dem sich der Nutzer 7 bei dem Online-Shop 3 angemeldet hat, eine Kontonummer, eine Kreditkartennummer, eine Telefonnummer oder eine Email-Adresse.

Mit dem erfindungsgemäßen Verfahren ist es also möglich, beispielsweise eine dem Nutzer 7 über das Fernsehgerät 16 präsentierte Werbung dahingehend zu bewerten, ob sie zu einem späteren Zeitpunkt zu einem tatsächlichen Einkauf des Nutzers 7 bei dem beworbenen Online-Shop 3 über ein anders Endgerät 8, 10, 12, 14 geführt hat. Mit anderen Worten, mit dem erfindungsgemäßen Verfahren kann der Erfolg einer auf einem beliebigen Endgerät 8, 10, 12, 14, 16, 18 einem Nutzer 7 präsentierten Werbung mit dem Nutzerverhalten des Nutzers 7 im Internet 2 verknüpft werden. Es ist also ein Endgeräte-übergreifendes Tracking des Nutzerverhaltens im Internet 2 und eine entsprechende Bewertung von Werbung möglich, selbst wenn die Werbung dem Nutzer 7 auf unterschiedlichen technischen Plattformen (z.B. Rundfunk und IP-Netzwerk) präsentiert wurde.

Aus dem für einzelne Nutzer 7 ermittelten Erfolg einer Werbung kann der Trackingserver 6 dann den Erfolg der auf dem Endgerät 8, 10, 12, 14, 16, 18 dargestellten Werbung für mehrere Nutzer ermitteln. Dies geschieht beispielsweise dadurch, dass anhand des Erfolgs der Werbung für die einzelnen Nutzer 7 ein gegebenenfalls gewichteter Mittelwert ermittelt wird. Der Trackingserver 6 kann in Abhängigkeit von dem ermittelten Erfolg der dargestellten Werbung entscheiden, ob die Werbung in Zukunft in anderer Form über einen anderen Anbieter und/oder auf anderen Endgeräten 8, 10, 12, 14, 16, 18 dargestellt wird, um so den Erfolg und die Effizienz der Werbung in Zukunft zu verbessern.

Zusammenfassend ist es mit der vorliegenden Erfindung also möglich, verschiedenartige Endgeräte (z.B. Mobiltelefon, Tablet-PC, Desktop-Computer, Laptop-Computer), die von demselben Nutzer zu unterschiedlichen Zeiten zum Aufruf von Internetangeboten genutzt werden, logisch miteinander zu verknüpfen. Selbst mit "aggressiven" Cookies (z.B. Cache Cookies) alleine, d.h. ohne eine zusätzliche Datenbank, in der zusätzliche Nutzer-bezogene Informationen abgespeichert sind, wäre eine solche Verknüpfung von verschiedenen Endgeräten eines Nutzers nicht möglich. Durch Verschlüsseln, bspw. Hashen, der in dem Cookie abgespeicherten Informationen und/oder der in der Datenbank abgelegten zusätzlichen Nutzer-bezogenen Informationen, können trotz der Möglichkeit der Verknüpfung der verschiedenen Endgeräte Sicherheits- und Datenschutzaspekte berücksichtigt werden. Die Erfindung ermöglicht also die Verknüpfung verschiedener Endgeräte anhand von persönlichen Nutzer-bezogenen Informationen aus der Datenbank, die aber so bspw. aufgrund von datenschutzrechtlicher Bedenken nicht einfach verknüpft werden dürfen. Die Hashwerte oder andere verschlüsselte Daten können dabei eine eindeutige, Endgeräte-unabhängige Identifikation des Nutzers ermöglichen und bilden somit eine Grundlage für die Verknüpfung der Endgeräte.

Die vorliegende Erfindung betrifft auch den Trackingserver 6, der zur Ausführung des beschriebenen Verfahrens ausgebildet ist. Ein derart ausgebildeter Trackingserver 6 kann eine Endgeräte-übergreifende Bewertung von Werbung vornehmen, die einem Nutzer 7 über ein beliebiges Endgerät 8, 10, 12, 14, 16, 18 und sogar über unterschiedliche technische Plattformen präsentiert wurde.

## Patentansprüche

1. Verfahren zum Endgeräte-übergreifenden Tracking eines Nutzers (7) im Internet, wobei der Nutzer (7) ein über einen Webserver (3, 4, 5) zur Verfügung gestelltes Internet-Angebot nutzt, das Verfahren umfassend die folgenden Schritte:
- beim Aufruf des Internet-Angebots von einem Webserver (3, 4, 5) durch den Nutzer (7) über ein Endgerät (8, 10, 12, 14, 16, 18), Empfangen von Informationen durch einen Trackingserver (6) über das Internet (2), die Informationen betreffend den Aufruf, das Internet-Angebot, den das Internet-Angebot zur Verfügung stellenden Webserver (3, 4, 5) und/oder das Endgerät (8, 10, 12, 14, 16, 18), und
- Identifikation des Endgeräts (8, 10, 12, 14, 16, 18) durch den Trackingserver (6),
**gekennzeichnet durch** die folgenden Schritte
- Empfangen von Nutzer-spezifischen Informationen **durch** den Trackingserver (6),
- Verarbeiten der empfangenen Informationen **durch** den Trackingserver,
- im Rahmen der Verarbeitung der empfangenen Informationen, Vergleich der empfangenen Informationen mit in einer Datenbank (21; 21'; 21") abgespeicherten Informationen, die einer Vielzahl von Nutzern (7) zugeordnet sind,
- bei einer zumindest teilweisen Übereinstimmung der empfangenen Informationen und der abgespeicherten Informationen, Identifikation des Nutzers (7) des Endgeräts (8, 10, 12, 14, 16, 18) anhand der empfangenen Informationen und der abgespeicherten Informationen, und
- Abspeichern von zusätzlichen, dem identifizierten Nutzer (7) zugeordneten Informationen in der Datenbank (21; 21'; 21"), die zusätzlichen Informationen betreffend das aufgerufene Internet-Angebot.

2. Verfahren nach Anspruch 1, **dadurch gekennzeichnet, dass** die Identifikation des Endgeräts (8, 10, 12, 14, 16, 18) durch Auslesen eines von dem Trackingserver (6) zuvor auf dem Endgerät (8, 10, 12, 14, 16, 18) abgelegten Cookies (20) enthaltend Informationen betreffend das Endgerät (8, 10, 12, 14, 16, 18), einen früheren Aufruf eines Internet-Angebots, das früher aufgerufene Internet-Angebot und/oder einen früheren Nutzer des Endgeräts (8, 10, 12, 14, 16, 18) erfolgt.

3. Verfahren nach Anspruch 2, **gekennzeichnet durch** die folgenden Schritte
- Versuch des Trackingservers (6) ein Cookie (20) von dem Endgerät (8, 10, 12, 14, 16, 18) einzulesen,
- falls auf dem Endgerät (8, 10, 12, 14, 16, 18) ein Cookie (20) des Trackingservers (6) abgelegt ist,
+ Auslesen der Informationen aus dem Cookie (20) **durch** den Trackingserver (6),
+ Verarbeiten der ausgelesenen Informationen,
+ im Rahmen der Verarbeitung der ausgelesenen Informationen, Vergleich der ausgelesenen Informationen mit in einer Datenbank (21; 21'; 21") abgespeicherten Informationen, die einer Vielzahl von Nutzern (7) zugeordnet sind,
+ bei einer zumindest teilweisen Übereinstimmung der ausgelesenen Informationen und der abgespeicherten nutzerindividuellen Informationen, Identifikation des Nutzers (7) des Endgeräts (8, 10, 12, 14, 16, 18),
+ Abspeichern von zusätzlichen, dem identifizierten Nutzer (7) zugeordneten Informationen in der Datenbank (21; 21'; 21"), die zusätzlichen Informationen betreffend das aufgerufene Internet-Angebot, und
- falls auf dem Endgerät (8, 10, 12, 14, 16, 18) kein Cookie (20) des Trackingservers (6) abgelegt ist,
+ Ablegen eines Cookies (20) auf dem Endgerät (8, 10, 12, 14, 16, 18) **durch** den Trackingserver (6), das Cookie (20) enthaltend Informationen betreffend das Endgerät (8, 10, 12, 14, 16, 18), den Aufruf und/oder das aufgerufene Internet-Angebot.

4. Verfahren nach Anspruch 1, **dadurch gekennzeichnet, dass** die Identifikation des Endgeräts (8, 10, 12, 14, 16, 18) mittels eines digitalen Fingerabdrucks des Nutzers (7) erfolgt.

5. Verfahren nach einem der Ansprüche 1 bis 4, **dadurch gekennzeichnet, dass** die in der Datenbank (21; 21'; 21") abgespeicherten und einer Vielzahl von Nutzern (7) zugeordneten Informationen für jeden Nutzer (7) eine eindeutige Kennung, einen Personennamen, einen Usernamen, unter dem der Nutzer (7) bei dem Webserver (3, 4, 5) registriert ist, eine Lieferanschrift, eine Rechnungsanschrift, eine Kundennummer, eine Bankverbindung, eine Telefonnummer und/oder eine Email-Adresse des Nutzers (7) umfassen.

6. Verfahren nach Anspruch 2 oder 3, **dadurch gekennzeichnet, dass** das auf dem Endgerät (8, 10, 12, 14, 16, 18) abgespeicherte Cookie (20) Informationen betreffend den früheren Nutzer in Form einer eindeutigen Kennung, eines Personennamens, eines Usernamens, unter dem der frühere Nutzer bei dem Webserver (3, 4. 5) registriert ist, einer Lieferanschrift, einer Rechnungsanschrift, einer Kundennummer, einer Bankverbindung, einer Telefonnummer und/oder einer Email-Adresse des früheren Nutzers des Endgeräts (8, 10, 12, 14, 16, 18) enthält.

7. Verfahren nach Anspruch 6, **dadurch gekennzeichnet, dass** die in der Datenbank (21; 21'; 21") abgespeicherten und einer Vielzahl von Nutzern (7) zugeordneten Informationen und/oder die in dem auf dem Endgerät (8, 10, 12, 14, 16, 18) abgespeicherten Cookie (20) enthaltenen Informationen vor dem Abspeichern in der Datenbank (21; 21'; 21") bzw. vor dem Ablegen auf dem Endgerät (8, 10, 12, 14, 16, 18) mittels einer Hashfunktion auf mindestens einem Hashwert abgebildet werden.

8. Verfahren nach einem der Ansprüche 1 bis 7, **dadurch gekennzeichnet, dass** die nach der Identifikation des Nutzers (7) in der Datenbank (21; 21'; 21") zusätzlich abgespeicherten, dem identifizierten Nutzer (7) zugeordneten Informationen einen Zeitpunkt des aktuellen Aufrufs des Internet-Angebots durch den Nutzer (7), eine Häufigkeit eines Aufrufs des Internet-Angebots durch den Nutzer (7), einen Zeitraum, während dem das Internet-Angebot von dem Nutzer (7) aufgerufen wurde, eine nach dem Aufruf des Internet-Angebots durch den Nutzer (7) erzielte Konversionsrate, einen nach dem Aufruf des Internet-Angebots durch den Nutzer (7) erzielten Umsatz und/oder eine Anzahl von nach dem Aufruf des Internet-Angebots und nach realisierter Konversion durch den Nutzer (7) getätigten Retouren umfassen.

9. Verfahren nach einem der Ansprüche 1 bis 8, **dadurch gekennzeichnet, dass** das Endgerät (8, 10, 12, 14, 16, 18) des Nutzers (7) nach dem Aufruf des Internet-Angebots unmittelbar an den das Internet-Angebot zur Verfügung stellenden Webserver (3, 4, 5) weitergeleitet wird und dass die in der Datenbank (21; 21'; 21") zusätzlich abzuspeichernden, dem identifizierten Nutzer (7) zugeordneten Informationen durch den Trackingserver (6) über das Internet (2) von dem Webserver (3, 4, 5), der das Internet-Angebot zur Verfügung stellt, empfangen werden.

10. Verfahren nach einem der Ansprüche 1 bis 8, **dadurch gekennzeichnet, dass** das Endgerät (8, 10, 12, 14, 16, 18) des Nutzers (7) nach dem Aufruf des Internet-Angebots mittelbar über den Trackingserver (6) an den das Internet-Angebot zur Verfügung stellenden Webserver (3, 4, 5) weitergeleitet wird und dass eine nachfolgende Kommunikation zwischen dem Endgerät (8, 10, 12, 14, 16, 18) und dem Webserver (3, 4, 5) über den Trackingserver (6) erfolgt, so dass der Trackingserver (6) Kenntnis von den in der Datenbank (21; 21'; 21") zusätzlich abzuspeichernden, dem identifizierten Nutzer (7) zugeordneten Informationen erhält.

11. Verfahren nach einem der Ansprüche 1 bis 10, **dadurch gekennzeichnet, dass** das Endgerät (8, 10, 12, 14, 16, 18) des Nutzers (7) ein Smartphone, ein Tablet-Computer, ein Laptop-Computer, ein Desktop-Computer oder ein Rundfunkgerät mit Internet-Anschluss ist.

12. Verfahren nach einem der Ansprüche 1 bis 11, **dadurch gekennzeichnet, dass** das Endgerät (8, 10, 12, 14, 16, 18) des Nutzers (7) ein Hybrid-Fernsehgerät (16) nach dem HbbTV-Standard ist, das Informationen sowohl über eine Rundfunkverbindung als auch über eine Internetverbindung empfangen kann, wobei der Trackingserver (6) zum Identifizieren des Nutzers (7) über die Internetverbindung mit dem Fernsehgerät (16) Informationen austauscht.

13. Verfahren nach Anspruch 2 oder 3, **dadurch gekennzeichnet, dass** das Endgerät (8, 10, 12, 14, 16, 18) des Nutzers (7) ein Hybrid-Fernsehgerät (16) nach dem HbbTV-Standard ist, das Informationen sowohl über eine Rundfunkverbindung als auch über eine Internetverbindung empfangen kann, wobei der Trackingserver (6) über die Internetverbindung ein auf dem Fernsehgerät (16) abgelegtes Cookie (20) ausliest bzw. das Cookie (20) auf dem Fernsehgerät (16) ablegt.

14. Verfahren nach einem der Ansprüche 1 bis 13, **dadurch gekennzeichnet, dass** der Trackingserver (6) die empfangenen Informationen derart verarbeitet, dass bezogen auf den Nutzer (7) der Erfolg einer dem Nutzer (7) auf einem beliebigen Endgerät (8, 10, 12, 14, 16, 18) zuvor präsentierten Werbung ermittelt wird.

15. Verfahren nach Anspruch 14, **dadurch gekennzeichnet, dass** im Rahmen der Verarbeitung der Informationen den Erfolg der auf dem Endgerät (8, 10, 12, 14, 16, 18) präsentierten Werbung für mehrere Nutzer (7) ermittelt wird.

16. Verfahren nach Anspruch 15, **dadurch gekennzeichnet, dass** in Abhängigkeit von dem ermittelten Erfolg der präsentierten Werbung entschieden wird, ob die Werbung in Zukunft in anderer Art und Weise, über einen anderen Anbieter und/oder auf anderen Endgeräten (8, 10, 12, 14, 16, 18) dargestellt wird, um den Erfolg der Werbung in Zukunft zu verbessern.

17. An das Internet (2) angeschlossener Trackingserver (6) mit Mitteln zum Empfangen von Informationen über das Internet (2), die einen Aufruf eines Internet-Angebots von einem Webserver (3, 4, 5) durch einen Nutzer (7) über ein Endgerät (8, 10, 12, 14, 16, 18), das Internet-Angebot, den das Internet-Angebot zur Verfügung stellenden Webserver (3, 4, 5) und/oder das Endgerät (8, 10, 12, 14, 16, 18) betreffen, und mit Mitteln zum Identifizieren des Endgeräts (8, 10, 12, 14, 16, 18), über das der Aufruf des Internet-Angebots erfolgte, **dadurch gekennzeichnet, dass** der Trackingserver (6) ferner aufweist,
- Mittel zum Empfangen von Nutzer-spezifischen Informationen,
- Mittel zum Verarbeiten der empfangenen Informationen,
- Mittel zum Vergleich der empfangenen Informationen mit in einer Datenbank (21; 21'; 21") abgespeicherten Informationen, die einer Vielzahl von Nutzern (7) zugeordnet sind, im Rahmen der Verarbeitung der ausgelesenen Informationen,
- Mittel zur Identifikation des Nutzers (7) des Endgeräts (8, 10, 12, 14, 16, 18), wenn der Vergleich eine zumindest teilweise Übereinstimmung der empfangenen Informationen und der abgespeicherten Informationen ergibt, und
- Mittel zum Abspeichern von zusätzlichen, dem identifizierten Nutzer (7) zugeordneten Informationen in der Datenbank (21; 21'; 21"), die zusätzlichen Informationen betreffend das aufgerufene Internet-Angebot.

18. Trackingserver (6) nach Anspruch 17, **dadurch gekennzeichnet, dass** der Trackingserver (6) Mittel zur Realisierung des Verfahrens nach einem der Ansprüche 2 bis 16 aufweist.

19. Computernetzwerk (1) umfassend zumindest einen Teil des Internets (2), einen an das Internet (2) angeschlossenen Trackingserver (6), mindestens einen an das Internet (2) angeschlossenen Webserver (3, 4, 5) und mehrere verschiedene mit dem Internet (2) verbindbare Endgeräte (8, 10, 12, 14, 16, 18), über die ein Nutzer (7) jeweils ein Internet-Angebot von dem mindestens einen Webserver (3, 4, 5) aufrufen kann, wobei der Trackingserver (6) umfasst:
- Mittel zum Empfangen von Informationen über das Internet (2), die den Aufruf eines Internet-Angebots von dem mindestens einen Webserver (3, 4, 5) durch den Nutzer (7) über eines der Endgeräte (8, 10, 12, 14, 16, 18), das Internet-Angebot, den das Internet-Angebot zur Verfügung stellenden Webserver (3, 4, 5) und/oder das Endgerät (8, 10, 12, 14, 16, 18) betreffen, und
- Mittel zum Identifizieren des Endgeräts (8, 10, 12, 14, 16, 18)), über das der Aufruf des Internet-Angebots erfolgte,
**dadurch gekennzeichnet, dass** das Computernetzwerk (1) ferner Mittel zur Realisierung des Verfahrens nach einem der Ansprüche 1 bis 16 aufweist.
